(19) Europäisches Patentamt
European Patent Office
Office européen des brevets

(11) **EP 2 808 935 A1**

(12) **EUROPÄISCHE PATENTANMELDUNG**

(43) Veröffentlichungstag:
**03.12.2014 Patentblatt 2014/49**

(51) Int Cl.:
***H01M 10/46*** (2006.01)  ***H02J 3/38*** (2006.01)
***H02J 7/35*** (2006.01)

(21) Anmeldenummer: **14401067.5**

(22) Anmeldetag: **28.05.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **31.05.2013 DE 102013105636**

(71) Anmelder: **Karlsruher Institut für Technologie
76131 Karlsruhe (DE)**

(72) Erfinder:
• **Gutsch, Andreas
  59348 Lüdinghausen (DE)**
• **Luengo Baranguán, Luis Fernando
  76137 Karlsruhe (DE)**
• **Munzke, Nina
  76137 Karlsruhe (DE)**

(54) **Elektrischer Stromerzeuger mit Stromspeicher und Verfahren zum Betreiben desselben**

(57) Elektrischer Stromerzeuger mit mindestens einer Stromquelle (101) und mindestens einem Stromspeicher (103), wobei eine Ladeschaltung vorgesehen ist und mindestens eine Stromquelle (101) und mindestens ein Stromspeicher (103) durch die Ladeschaltung (104) miteinander elektrisch verschaltet sind. Dier Aufgabe besteht darin, diesen als insbesondere verbessertes Solarstromspeichersystem, mit Akkumulator als Stromspeicher (103) bei erhöhter Effizienz, Nutzungsgrad und Sicherheit sowie ein Verfahren zum Betreiben derselben bereitzustellen. Die Aufgabe wird dadurch gelöst, dass die Ladeschaltung keine DC/DC -Schaltwandler (102) aufweist sowie die verschalteten Stromquellen (101) je eine Leerlaufspannung und der verschalteten Stromspeicher (103) je eine Batteriespannung aufweisen und das Verhältnis von Batteriespannung zu serieller PV-Leerlaufspannung zwischen 0,5 und 1,5 liegt.

Fig. 11

EP 2 808 935 A1

**Beschreibung**

Die Erfindung betrifft einen elektrischen Stromerzeuger, vorzugsweise ein Photovoltaik - Stromspeichersystem mit einem Stromspeicher sowie ein Verfahren zum Betreiben derselben. Die Erfindung dient der Erzeugung, der Zwischenspeicherung, Nutzung und Verteilung von elektrischer Energie aus einer oder mehrerer Stromquellen vorzugsweise von regenerativer Energie.

Die Erfindung wird im Zusammenhang mit ortsfesten Anwendungen, bevorzugt und am Beispiel einer Solarstromanlage (PV-Anlage) beschrieben. Es wird darauf hingewiesen, dass die Erfindung aber durchaus auch unabhängig von der Bauart von Stromerzeuger, Stromquelle oder Stromspeicher in nicht ortsfesten Anwendungen wie Fahrzeugen oder mobilen Systemen vorteilhaft einsetzbar ist.

So ist ein elektrischer Stromerzeuger der vorgenannten Art auch für Batteriebaugruppen als Stromspeicher für eine Traktionsanwendung vorteilhaft, sofern diese beispielsweise für eine Aufladung dieser z.B. an einer modularen Sonnenstromtankstelle oder einer anderen temporär mit dieser verschalteten Stromquelle vorgesehen ist.

Grundsätzlich sind die Stromspeicher wie Batterien oder Batteriebaugruppen und / oder die Stromquellen wie z.B. mindestens eine Solarzelle umfassend im Rahmen der Erfindung wahlweise sowohl mobil als auch stationär einsetzbar.

Stromspeicher im Rahmen der Erfindung sind vorzugsweise elektrochemische Speichermedien oder elektrostatische Ladungsspeicher. Elektrochemische Speichermedien umfassen dabei einen Akkuzellensatz (Batterie, Akkumulator, Akku) mit mindestens einer einzelnen Akkuzelle. Dabei werden die einzelnen Akkuzellen im Akkuzellensatz parallel und/oder seriell verschaltet; die resultierenden Zellspannungen sind damit durch entsprechende Verschaltung einstellbar.

Stromquelle und Stromspeicher sind im Sinne der Erfindung über eine Ladeschaltung miteinander verschaltbar. Ladeschaltungen sind allgemein bekannt, Sie dienen der Aufladung des Stromspeichers und umfassen hierzu mehrere Schaltungskomponenten für verschiedene Funktionen. Eine wesentliche Schaltungskomponente ist der Laderegler, der zum einen die Ladespannung für die Batterie oder jeder einzelnen Akkuzelle begrenzt und damit eine Überladung verhindert, andererseits den Ladestrom in Abhängigkeit des Ladezustands und der Temperatur in der Batterie oder Zelle begrenzt. Zur Begrenzung und Regelung des Ladestroms greift der Laderegler auf eine weitere wesentliche Komponente zurück, ein Gleichspannungswandler wie z.B. einen DC/DC-Schaltwandler als Gleichspannungs-Gleichspannungs-Wandler zur direkten Gleichspannungswandlung oder z.B. ein DC/AC-AC/DC-Schaltwandlersystem (umfassend jeweils einen Gleichspannungs-Wechselstrom- und einen Wechselstrom-GleichspannungsWandler) als indirekte Gleichspannungswandlung zum Ab- oder Aufwärtswandeln eines Ausgangsstroms der Ladeschaltung. Weiterhin sind Schaltungskomponenten für eine Überwachung der Temperatur, der Spannung, der Kapazität sowie des Ladestroms der Batterie oder der einzelnen Akkuzellen oder Batterie vorgesehen. Ladungsschaltungen für ältere, in ihrem Ladungsverhalten unempfindliche Akkumulatoren und Akkuzellen wie z.B. Bleiakkumulatoren oder Ni-Cd-Akkumulatoren, weisen einen einfachen Aufbau auf. Sie nutzen eine Gleichspannungsquelle, die sie mit den Akkumulatoren und Akkuzellen verschalten. Zwingend erforderlich ist jedoch ein Überlastschutz, d.h. Mittel zur Begrenzung der Ladespannung, der Ladezeit und des Ladungsstroms, d.h. zumindest eine Ladeschaltung der vorgenannten Art.

Aktuelle Stromspeicherentwicklungen wie z.B. Lithium-Ionen-Batterien erfordern dagegen neue komplexere Ladungsschaltungsgenerationen mit zusätzlichen Funktionen. Aufgrund eines sensiblen Ladungsverhaltens und einer ausgeprägten Empfindlichkeit gegenüber Überlastung dieser Stromspeicher umfassen die erforderlichen Ladeschaltungen zusätzlich zum Gleichspannungswandler eine Vielzahl von Überwachungs- und Regelschaltungen. Hinzu kommen Sicherungsschaltungen z.B. zur Erkennung des jeweils aktiv angeschlossenen Akkutyps sowie bei Bedarf zusätzliche Entladungsschaltungen.

Bekannte Ladeschaltungen mit einer zunehmenden Anzahl von Funktionen werden technisch üblicherweise als elektronische Schaltungen teilweise mit integrierten prozessor- und softwaregestützten Systemlösungen umgesetzt. Mit einer zunehmenden Komplexität steigt jedoch nicht nur die Störanfälligkeit, sondern auch der Strombedarf. Zudem enthalten sie leistungselektronische Bauelemente, die insbesondere bei dezentralen Anwendungen wie z.B. bei im Inselbetrieb oder dezentral betriebenen Stromerzeugern mit Stromspeichern einen zusätzlichen Aufwand für deren Überwachung z.B. gegenüber Störungen und Überhitzung erfordern.

Beispielspeise wird in [1] ausgehend von der vorgenannten Problematik eine Ladeschaltung für einen Akkuzelleneinsatz offenbart, die mit dem Ziel eines einfachen Aufbaus und einer geringen Störanfälligkeit konzipiert und optimiert wurde. Dennoch umfasst diese als wesentliche Komponenten nach wie vor ein DC/DC-Schaltwander zum Abwärtswandeln eines Ausgangsstroms (Abgabespannung von der Stromquelle), einer Einzelüberwachungseinrichtung zur Überwachung einzelner Akkuzellen, einer Temperaturüberwachung- und Lastmanagementeinrichtung zur Überwachung von Temperaturen des Akkus und zum Managen der Last des Akkus. Ferner enthält diese Schaltung auch eine Kontrolleinrichtung zur Kontrolle der Einrichtungen DC/DC-Schaltwandlers, der Einzelzellüberwachungseinrichtung und Temperaturüberwachung- und Lastmanagementeinrichtung, wobei die genannten Komponenten auf einem Halbleiterchip mit verknüpften Logikelementen integriert sind.

Eine Ladeschaltung ohne einen Gleichspannungswandler ist dagegen nicht bekannt.

Stromquellen im Rahmen der Erfindung sind vorzugsweise DC-Spannungsquellen, vorzugsweise Solarzellen (PV-Zellen) einer PV-Anlage. Mehrere Solarzellen, die jeweils die kleinsten stromerzeugenden Einheiten einer PV-Anlage darstellen, werden in Reihe zu Photovoltarik-Modulen (PV-Modulen) zusammengefasst, wobei sich die Spannungen der Einzelzellen zu einer PV-Modulspannung addieren. Durch paralleles oder serielles Verschalten von PV-Modulen entstehen Photovoltarik-Strings (PV-Strings, Solarpanel). Photovoltaikanlagen (PV-Anlagen) sind elektrische Stromerzeuger der eingangs genannten Art. Sie wandeln das elektromagnetische Spektrum der Sonne in halbleitenden Schichten in elektrischen Strom um. Kernelement sind die Solarzellen (zusammengefasst zu Photovoltarik-Modulen, PV Modulen), die durch den Photonenbeschuss der Einstrahlung eine Trennung von positiven und negativen Ladungen erzeugen. Wenn dabei eine elektrisch leitende Verbindung zwischen den Ladungszonen hergestellt wird, fließt ein elektrischer Strom. Die so gewonnene Leistung kann entweder direkt verwendet, in Solarbatterien gespeichert oder auch mit Hilfe von Wechselrichtern in ein bzw. das öffentliche Stromnetz eingespeist werden. Eine entsprechende Umschaltvorrichtung ist Teil der Ladeschaltung.

Grundsätzlich wird zwischen Halbleiter-Solarzellen, organische Solarzellen, Farbstoffzellen und Halbleiter-Elektrolytzellen unterschieden. Zu den Halbleiter-Solarzellen zählen Siliziumzellen (Dünnschicht- oder Dickschichtzellen), III-V-Halbleiter-Solarzellen (z.B. GaAs-Zellen), II-VI-Halbleiter-Solarzellen (z.B. CeTe-Zellen) und I-III-VI-Halbleiter-Solarzellen (z.B. CIS- und CIGS-Solarzellen, Chalkopyrite).

Mittlerweile werden PV-Anlagen mit einer Spitzenleistung von mehreren Megawatt, parallel und seriell aufgeschaltet, gebaut und betrieben.

Durch serielles Verschalten der Solarmodule (PV-Module) zu PV-Strings sind hohe Spannungen erzeugbar, wobei jedes PV-Modul eine Spannung von in der Regel 21 bis zu 71 V (durchschnittlich 50 V) erzeugt **[3].**

Eine Parallelschaltung der einzelnen PV-Module zu PV-Strings findet sich im batteriegestützten Inselbetrieb, aber auch im vernetzten Einsatz wie z.B. von PV-Anlagen auf Hausdächern oder Solarparks. Handelt es sich um eine netzgekoppelten Stromerzeuger, wird mit Hilfe eines Wechselrichters der im PV-String entstehende Gleichstrom in Wechselstrom gewandelt und ins Stromnetz eingespeist. Abgesehen von den Umwandlungsverlusten, geschieht dies in der Regel vollständig, solange das Netz in hinreichender Qualität (Spannung/Frequenz) zur Verfügung steht. Netzgekoppelte PV-Anlagen stellen dem Stromnetz im Normalfall keine Regelleistung zur Verfügung, da grundsätzlich ein Maximum an regenerativer Energie erzeugt werden soll.

Allerdings müssen PV-Anlagen ab 100 kW Peakleistung nach §6 EEG (Deutsches Erneuerbare Energien Gesetz) in der Lage sein, im Falle von Netzüberlastungen ihre Leistung durch den Netzbetreiber ferngesteuert zu reduzieren. Anstelle einer Reduzierung der Anlagenleistung könnte eine Zwischenspeicherung in Stromspeichern vorgesehen werden. Bei netzfernen Stromerzeugern wird eine erzeugte Energie, sofern sie nicht direkt verwendet wird, anstelle einer Einspeisung in ein Stromnetz in Stromspeicher (Energiespeicher) zwischengespeichert.

PV-Modulen oder PV-Strings erzeugen jedoch wie auch andere regenerativen Energiequellen wie z.B. die Windkraftanlagen nicht konstante Systemspannung. Beispielsweise erzeugt ein PV-Modul oder PV-String mit einer Systemspannung von 12 Volt je nach Umgebungstemperatur, Sonneneinstrahlung und dem Widerstand des angeschlossenen Verbrauchers eine Spannung zwischen 0 und 22 Volt (Klemmspannung). Die größte Energieeffizienz hat das PV-Modul im sog. Maximum Power Punkt (MPP-Punkt). Dieser liegt bei direkter Sonneneinstrahlung und 25°C Umgebungstemperatur zwischen 16,5 und 17 Volt (bei Strom-Speichersystemen mit 12 Volt Spannung).

Zum Schutz des zu ladenden Akkus vor diesen hohen Spannungen bzw. Überspannung werden bei Ladeschaltungen Gleichspannungswandler eingesetzt. Diese umfassen auch einen sogenannten Maximum-Power-Point-Regler (MPP-Regler, MPP = Maximaler Leistungspunkt, Leistung P = Spannung U • Stromstärke I), der die Klemmspannung vom PV-Modul oder PV-String nur innerhalb eines eingestellten Spannungsintervalls, das auf die charakteristischen Strom-Spannungsverläufe des PV-Moduls oder PV-Strings eingestellt ist. Er generiert damit gegenüber einem Standardregler bis zu 30% mehr Energie aus dem Solarmodul. Ein MPP-Regler, in einem Batterieladegerät, funktioniert so, dass er die Spannung am PV-Modul so eingestellt wird, dass die maximale Leistung aus dem Solarmodul entnommen werden kann. Mittels eines Gleichspannungswandlers wird diese dann temporär getaktet auf die typische Batterieladespannung transformiert.

Eine Solarbatterie mit Bleiakkuzellen als Stromspeicher weist beispielsweise während des Ladens je nach Ladezustand resultierende Zellspannungen von 11,8 bis 14,4 Volt auf. Einige 100 mV fallen zusätzlich noch beim Betrieb des Ladereglers ab, so dass die Klemmenspannung des Moduls, also seine Betriebsspannung ca. 25% unterhalb des Spannungswertes vom MPP-Punkt des PV-Moduls liegt.

Die Stromstärke, die ein PV-Modul oder PV-String liefert, erhöht sich jedoch nicht in dem gleichen Maße, wie die Spannung abfällt. Mit systembedingten Verlusten ist zu rechnen. Die Akkumulatoren lassen sich seriell wie parallel aufschalten und betreiben.

Das vermehrte Aufkommen regenerativer und dezentraler Stromerzeugung hat zur Folge, dass neben der Ausspeisung in Richtung von Verbrauchern auch vermehrt zu dezentralen Nutzungen mit Speicherlösungen übergegangen werden sollen. Diese können gekoppelt auch in die Mittel- und Niederspannungsnetze einspeisen, diese abpuffern oder im Parallelbetrieb eingesetzt werden.

Das Wesen einer netzautarken Solarstromanlage (PV-Anlage) als Insel-Anlage ist die permanente - oder auch temporäre - Trennung vom öffentlichen Stromnetz. Mit Hilfe von Akkus und Inselwechselrichtern wird meist innerhalb von Millisekunden ein Inselsystem auf Basis der üblichen Netzwechselspannung aufgebaut, um die Versorgung des Haushaltes aufrechtzuerhalten. Solche Backup-Systeme eignen sich aber auch zur Steigerung des Eigenverbrauchs in üblichen netzgekoppelten Solarstromanlagen - tagsüber wird der nicht verbrauchte Strom zunächst zwischengespeichert, um dann später bei Bedarf verbraucht zu werden. Die vorgenannten Insel-Anlagen, welche permanent ohne Netzanbindung betrieben werden, basieren bei kleineren Anwendungen auf einer mit 12 oder 24 Volt Gleichspannung betriebenen Verbraucheranlage. Im Wesentlichen besteht eine solche Anlage aus vier Komponenten: dem Solargenerator, den Ladeschaltung der vorgenannten Art, den Akkus und den Verbrauchern.

**[2]** offenbart beispielsweise eine solche Ladeschaltung für einen Inselbetrieb für Lithium-Ionen Batterien eines elektrischen Stromerzeugers des Typs VS 5 Hybrid der Fa. Voltwerk (Bosch Gruppe) der eingangs genannten Art. Die Ladeschaltung wird zwischen PV-Module oder PV-Strings und Wechselrichter eingesetzt. Weiterhin umfasst die Ladeschaltung ein Lademanagement- und Monitoringsystem (Überwachungssystem), das über ein Touchdisplay (berührungssensorische Anzeige) am Gerät oder eine App (Anwendungsprogramm) für mobile Endgeräte gesteuert wird.

Alle diese Komponenten der Anlage sollten dem vorliegenden Lastprofil der elektrischen Verbraucher entsprechend harmonisch aufeinander abgestimmt sein, um einen hohen Nutzungsgrad zu gewährleisten.

Die zunehmende Anbindung dezentraler, vorzüglich regenerativer Energieerzeugungsanlagen in die Stromnetze führt immer häufiger zur Umkehrung der Lastflussrichtung und so zu kritischen Netzzuständen durch unzulässige Spannungsanhebungen.

Der vorliegenden Erfindung liegt mithin also die **Aufgabe** zugrunde, einen elektrischen Stromerzeuger als insbesondere verbessertes Solarstromspeichersystem, mit Akkumulator, vorzugsweise einen Lithium-Ionen-Akkumulator als Stromspeicher bei erhöhter Effizienz, Störungssicherheit, Nutzungsgrad und Sicherheit, mit vereinfachtem Aufbau und Schaltungsaufwand sowie ein Verfahren zum Betreiben derselben bereitzustellen.

Diese Aufgabe wird durch einen elektrischen Stromerzeuger mit einem Stromspeicher mit den Merkmalen des Anspruches 1 und ein Verfahren zum Betrieb mit den Merkmalen des Anspruches 8 gelöst. Besonders bevorzugte Weiterbildungen der Erfindung sind Gegenstand der Unteransprüche.

Zur Lösung der Aufgabe wird ein elektrischer Stromerzeuger mit einer Ladeschaltung zwischen einer Stromquelle, vorzugsweise umfassend eine Solarzelle z.B. eines PV-Moduls oder PV-Strings und einem Stromspeicher vorgeschlagen, wobei die Ladeschaltung ohne eine direkte oder indirekte Gleichspannungswandlung, insbesondere ohne eine DC/DC- Wandlerschaltung (DC/DC oder DC/AC-AC/DC) oder einen MPP-Regler auskommt.

Überraschend wurde gefunden, dass eine gute Effizienz des Solarstromspeichersystems auch ohne Gleichspannungswandlung (z.B. DC/DC Wandler, Batterieladeregler) gegeben ist. Vorzugsweise sind Stromquelle und Stromspeicher (Batterie) über die Ladeschaltung direkt verschaltet (direkte Ladeschaltung, d.h. der Ladestrom durchläuft von der Stromquelle zum Stromspeicher weder eine Zwischenelektronik (z.B. leistungselektronische Baugruppen) noch einen MPP Regler. Die direkte Ladeschaltung weist damit vorzugsweise eine direkte elektrische Verbindung für den Ladestrom zwischen Stromquelle und Stromspeicher auf, wobei der Ladestrom nicht durch eine Ladeelektronik geregelt wird. Die direkte Ladeschaltung umfasst jedoch optional Schaltelemente wie Schütze oder Relais zum Schalten der Lade-und Entladeströme. Mithin wird der Stromspeicher direkt mit der Stromquelle, bevorzugt einem PV-Modul oder einem PV-String verbunden.

Die Stromquelle umfasst im Falle einer PV-Anlage mit mindestens einer PV-Zelle mindestens ein PV-Modul, vorzugsweise mindestens ein PV-String. Ebenso umfasst der Stromspeicher optional mehrere seriell und/oder parallel geschalteter Akkuzellensätze (Akkus). Eine direkte Ladeschaltung umfasst erfindungsgemäß vorzugsweise auch je eine direkte elektrische Verbindung je PV-Modul oder PV-String und / oder je Akkuzellensatz zum Stromspeicher bzw. zur Stromquelle. Die direkten elektrischen Verbindungen sind vorzugsweise individuell, d.h. unabhängig voneinander schaltbar.

Dadurch werden solche Systeme auch effizienter und langlebiger und zuverlässiger, weil die Störanfälligkeit aufgrund reduzierter elektronischer Baugruppen in der vorgeschlagenen erfindungsgemäßen Ausführung reduziert ist. Ebenso reduzieren sich signifikant die Wartungsaufwendungen.

Gegenüber bekannten Ladeschaltungen ist der Ladestrom nicht regelbar, sondern nur schaltbar. Vorzugsweise sind hierfür Sicherungselemente oder Sicherungsschaltungen vorgesehen, die die Betriebseigenschaften der Systemkomponenten überwachen und bei Über- oder Unterschreitung eines vorgegebenen Wertes den Ladestrom unterbrechen. Von besonderem Vorteil ist, dass die Überladesicherheit wie auch die Unterladesicherheit erfindungsgemäß durch ggf. eine einfache Anordnung von Sicherungselementen, hier wie vorliegend, Relais, Leistungsschalter, Schütze oder Sicherungen, insbesondere thermische Sicherungen und dergleichen realisierbar ist.

Insbesondere durch ein Zuschalten oder Abschalten von PV-Modulen der PV-Anlage oder von Akkuzellensätzen des Stromspeichers ist eine verbesserte Ausnutzung des sicheren Betriebsfensters des Ladevorgangs in Optimierung der Lebensdauer des Stromspeichers erreichbar. Vorzugsweise werden Akkuzellen mit einer möglichst hohen Zellspannung zum Einsatz, wie z.B. Lithium-Ionen-System (ca. 3,3 - 4,0 V) oder weiter bevorzugt ein auf 5V-Systemen basierender Akkumulator.

Das erfindungsgemäße Solarspeichersystem besteht im einfachsten Fall aus einer Solarzelle und einer Akkuzelle als Stromspeicher, welche ohne Gleichspannungswandlung (z.B. DC/DC Elektronik) in der Ladeschaltung verschaltet sind. Dabei werden ausgewählte Betriebsparameterdaten, insbesondere die Temperatur beschränkt.

Regelmäßig wird das System des elektrischen Stromerzeugers zumindest eine Sicherungseinrichtung der erfindungsgemäß beschriebenen Art, vorzüglich in Form eines Leistungsschalters, -schützes oder Relais und dergleichen aufweisen.

Vorteilhaft ist, einen robusten belastbaren Zelltyp für den Stromspeicher einzusetzen, etwa ein High Rate Lithium-Ionen Batteriesystem mit $3C_{disch}$ oder Energie / Power Zelle mit $5C_{disch}$, wie diese grundsätzlich bereits am Markt zu finden sind.

Denn es zeigte sich in überraschender Weise, dass dadurch auch in höherer Bedarfslast des Verbrauchers ein Spannungseinbruch reduzierbar ist, so wie dies partiell mit Hilfe eines MPP Reglers vergleichbar erreichbar ist. Beispielsweise wird im Falle eines 60 Grad heißen PV- Moduls des elektrischen Stromerzeugers durch die MPP Regelung einen Gewinn von ca. 10% Energieausbeute im Vergleich zu herkömmlichen Ladeschaltungen ohne MPP-Regelung erreicht. Dies ist auch durch die beschriebene, erfindungsgemäße Ladeschaltung direkt erreichbar, so dass dieser Vorteil auch ohne den MPP Regler mit den genannten Akkumulatoren und deren Batteriemanagementsystem überraschend erreicht wird. Vorteilhaft sind Stromspeicher, die > 1 C in Entladerichtung (entladbar in einer Stunde) belastbar sind oder deren Spannungseinbruch konstruktiv minimiert ist.

Die Erfindung ist also gekennzeichnet durch ein direktes Laden des Stromspeichers als Batterie ohne Gleichspannungswandlung (DC/DC-Wandlung) und vorzugsweise ohne Ladelektronik und MPP Regler und dergleichen durch mindestens eine Stromquelle.

Dabei werden vorzugsweise der Betriebsbereich, d.h. die zulässigen Ladeparameter und die zulässigen Entladeparameter als beispielhafte Betriebsparameterdaten insbesondere hinsichtlich der Temperatur beschränkt, sowohl im Bereich der vollen Ladung wie hin zum unteren, als zulässig definierten Ladezustand (bezogen auf SOC-Wert, SOC = State of Charge).

Der Ladebereich definiert sich als der Parameterbereich (Temperaturbereich, Spannungsintervall, Ladestrombereich), bei dem die Aufladung möglich oder vorgesehen ist.

Vorliegend wird unter einem elektrischen Stromerzeuger als Energiequelle vorzugsweise eine Solarstromanlage (PV-Anlage) verstanden; als Stromquelle dienen dabei PV-Module oder PV-Strings vorzugsweise der eingangs genannten Art. Es liegt aber im Rahmen der Erfindung, auch andere Stromquellen oder andere stromerzeugende Einheiten als Stromquelle einzusetzen, beispielsweise Windenergiegeneratoren, Wasserkraftanlagen als regenerative Energiequellen einerseits oder Blockheizkraftwerke, Fahrzeuggeneratoren, Notstromaggregate, Batterieladestationen oder andere Stromquellen, die sich dadurch auszeichnen, dass sie vorzugsweise dezentral zum Einspeisenetz aufgestellt sind und/oder eine nicht konstanter Energiemenge erzeugen oder einem Stromspeicher bereitstellen, andererseits.

Vorliegend ist eine bevorzugte Solarzelle (PV-Zelle) ein elektrisches Bauelement, das kurzwellige Strahlungsenergie, in der Regel Sonnenlicht, direkt in elektrische Energie umwandelt. Solarzellen sind photovoltaische Scheiben, die zu Solarmodulen mit Stromanschlüssen und Schutzschicht zusammengefasst werden.

Solarzellen unterscheiden sich dadurch grundsätzlich von anderen Arten der regenerativen Elektrizitätserzeugung, bei denen lediglich die Antriebsenergie für den Generator nicht konventionell erzeugt wird. Erfindungsgemäß sind alle Arten aus diversen Materialien und Bauformen solcher Zellen wie Dick-, Dünnschicht, Halbleitersolarzellen, Bio, Si Wire Arrey, organische, Fabstoff-, Grätzel oder auch Halbleiterelektrolytzellen oder Halbleitergaszellen insbesondere umfasst. Eine Hybridsolarzelle ist eine Solarzelle, die organische und anorganische Bestandteile enthält. Fluoreszenz-Zellen sind Solarzellen, die zunächst in einer Platte durch Fluoreszenz Licht größerer Wellenlänge erzeugen, um dieses an den Plattenkanten zu wandeln.

Eine Verwendung von thermischen Solarzellen (TPV-Zellen) als Stromquellen liegt ebenfalls im Rahmen der Erfindung. Unter dem Namen Thermische Photovoltaik-Zellen (TPV) werden Zellen auf Basis von InP verstanden, die nicht Sonnenlicht verwerten, sondern Wärmestrahlung, also Licht wesentlich höherer Wellenlänge. Eine potentielle Anwendung solcher Zellen wäre die Verwertung von Wärme, wie sie bei großtechnischen Anwendungen in großen Mengen entsteht und die bisher mit zusätzlichem Aufwand entsorgt werden muss.

Vorliegend besteht ein Solarstromspeichersystem als regelmäßig aus einer oder mehreren PV Einheiten (PV-Zellen, PV-Module, PV-Strings) und der Stromspeicher, regelmäßig aus Akkumulatoren (Batterie, Akkuzellensatz, Akku), letztere auch als elektrochemische Energiespeicher oder galvanische Batterien bezeichnet.

Galvanische Batterien werden häufig auch in der Form stapelbarer oder gewickelter Einheiten hergestellt, aus denen durch Zusammenfassung einer Mehrzahl solcher Zellen Batterien oder Batteriebaugruppen für verschiedene Anwendungen, insbesondere für einen Einsatz in ortsfesten Batterieanlagen verschiedener Anwendungen hergestellt werden können.

Diese werden aus Zellen- Modulen, Batteriebaugruppen oder Batterien aufgebaut, die über ein Batteriemanagement verfügen. In jüngerer Zeit werden insbesondere Lithiumbatterien auch gefaltet und gewickelt.

Vorliegend ist der SOC-Wert (SOC = State of Charge) als Ladezustand gekennzeichnet. Der SOC-Wert ist ein Kennwert für den Ladezustand von Akkus als Stromspeicher. Der SOC-Wert kennzeichnet die noch verfügbare Kapazität eines Akkus im Verhältnis zum Nominalwert. Der Ladezustand wird in Prozent vom vollgeladenen Zustand angegeben. 30% bedeuten somit, dass der Akku noch eine Restladung von 30% bezogen auf die Vollladung von 100% hat. Der Ladezustand lässt sich vorzugsweise über die elektrische Spannung in Volt (an den Polklemmen) und der Temperaturumgebung (in Ableiternähe gemessen) bestimmt werden. Bei einem alternativen Verfahren der SOC Bestimmung wird die Ladung in Ah direkt gemessen und bezogen auf die Vollladung in 5 umgerechnet. Ein unterer, als zulässig definierter Ladezustand (Entladungstiefe) wird in SOC-Werten angegeben.

In direkter Beziehung zum SOC-Wert steht der DoD-Wert (Depth of Discharge), die Entladungstiefe in Prozent ausgehend vom vollgeladenen Zustand angibt.

In diesem Zusammenhang soll unter einem elektrochemischen Energiespeicher als Stromspeicher also eine Einrichtung verstanden werden, die Energie in chemischer Form speichert und diese Energie in elektrischer Form an einen externen Verbraucher abgeben kann. Wichtige Beispiele für solche Energiespeicher sind Brennstoffzellen und galvanische Zellen sowie Aggregate aus einer Mehrzahl solcher Zellen.

Vorzugsweise sind die Zellen dabei Sekundärzellen, also elektrochemische Energiespeicher, welche in chemischer Form gespeicherte Energie nicht nur in elektrischer Form an einen Verbraucher abgeben können, sondern welche bei Zurverfügungstellung von elektrischer Energie diese auch in chemischer Form speichern, d.h. also geladen werden können.

Vorzugsweise weist der erfindungsgemäße Stromspeicher in Sekundärzellen Ionen auf. Diese Ausführung bietet gegenüber z.B. Bleiakkumulatoren den Vorteil einer erhöhten Energiedichte der Sekundärbatterie, beispielsweise einer Energiedichte von wenigstens 40 Wh/kg für Li-Ionen-Akkumulatoren.

Erfindungsgemäß sind bevorzugt Stromspeicher mit Materialkombinationen und auch Hochvoltzellbatteriestromspeichersysteme der Lithium-Ionen oder Li-Metall, Li-Luft -Typen einsetzbar. Besonders vorteilhaft ist bei einem Li-Ionen System mit Mischoxiden die maximale Spannung $U_{max}$, die je nach Marteilkombination der Elektroden und dem Elektrolyten bis 4,2 V einstellbar ist (vgl. Ausführungsbeispiel (Studie) Punkt 8.2).

Statt einem Lithium System eignet sich aufgrund des hohen Spannungsniveaus der Zellspannungen (Nennspannung U) auch Schwefel- oder auch Magnesiumbatterien oder anderen Akkuzellen mit Spannungsniveaus oberhalb 3 V Entladespannung.

Erfindungsgemäß von besonderem Vorteil ist der Einsatz eines Stromspeichers der auf Systemen beruht, die eine maximale Spannung von ca. 5 V in Bizellentechnologie (Akku besteht aus zwei Akkuzellen) oder als Hochvoltzellen (5 V Systeme wie Spinell, $LiNiMnO_4$ und dergleichen) verwenden (vgl. Ausführungsbeispiel (Studie) Punkt 8.2).

Als untere Spannungsgrenzen kommen bei einem LTO System (Lithium-Titanium-Oxide)nach dem Vorschlag der Erfindung 1,9 V oder bei einem LiFP-System 2,9 V in Frage, temperaturabhängig ggf. variiert. Bei einem Hochvoltspinell Zellsystem wären dies 4,5 V maximale Spannung vorschlagsgemäß für den optimalen Effizienzbereich. Der Bereich kann nach einer besonderen Ausführung des Systems auch durch eine gute Isolation oder Klimatisierung verbessert werden.

Die Erfindung ist gekennzeichnet durch ein direktes Laden der Batterie ohne einen Umweg des Ladestroms über eine Ladelektronik mit direkter oder indirekter Gleichspannungswandlung der vorgenannten Art (Schaltwandler, DC/DC- oder DC/AC-AC/DC-Wandlung). Dabei sollen erfindungsgemäß die Ladebereiche und der Betriebsbereich insbesondere hinsichtlich eines vorzüglichen Parameters wie der Temperatur oder der Spannung an den Polklemmen, zweier Parameter wie dem SOC und der Temperatur beschränkt werden, sowohl im Bereich der vollen Ladung wie hin zum leeren Ladezustand. Hierfür weist die Ladeschaltung bevorzugt zusätzliche elektrische Mittel wie Sicherungselemente, umfassend vorzugsweise Erfassungsmittel für die Temperatur und/oder die Ladespannung sowie vorzugsweise mindestens einen Unterbrecherkontakt für die bevorzugt direkte elektrische Verbindung zwischen Stromquelle und Stromspeicher ohne eine Ladeelektronik (z.B. Gleichspannungswandlung) auf.

Ein vorgeschlagener elektrischer Stromerzeuger mit Stromspeicher zeichnet sich weiterhin vorzugsweise dadurch aus, dass Stromerzeuger und Stromspeicher in Ladeschaltung verschaltet sind. Vorzugsweise zeichnet sich dieser dadurch aus, dass Stromerzeuger und Stromspeicher in direkter Ladeschaltung ohne Ladeelektronik oder Regler verschaltet sind und /oder das Verhältnis von Batteriespannung zu serieller PV-Stringstillstandsspannung im Bereich von 0,5-1,5 liegt. Weiter bevorzugt sind ein oder mehrere Sicherungselemente geschaltet, wobei weiter bevorzugt die Stromspeicher mit Sicherungselement und Temperaturmessung angeordnet sind. Ferner zeichnet sich der elektrische Stromerzeuger weiter bevorzugt dadurch aus, dass der Stromerzeuger zumindest partiell durch Sicherungselement kurzgeschlossen wird. Der genannte elektrische Stromerzeuger mit Stromspeicher weist weiter bevorzugt temperaturgeführt beschränkte Ladebereiche und/oder einen spannungsseitig beschränkte Betriebsbereich auf. Weitere Ausgestaltungen sehen vor, dass der Ladezustand des Stromspeichers bei einem bevorzugten 5V-Batteriesystem auf mindestens 0% begrenzt wird, dass als Sicherungselement ein Leistungsschalter oder Schütz angeordnet ist, dass der Stromspeicher Lithium- Ionen aufweist und eine Energiedichte von wenigstens 40 Wh/kg aufweist und/oder dass ein Überladen des Stromspeichers bei mehr als 9 Zellen mit 4 V Stromspeichersystemzellen pro PV-Modul verhindert ist. Der elektrische Stromerzeuger wird weiter bevorzugt in direkter Ladeschaltung mit dem Stromspeicher betrieben.

Ein vorgeschlagenes Verfahren zum Betreiben eines vorgenannten elektrischen Stromerzeugers mit Stromspeicher zeichnet sich vorzugsweise dadurch aus, dass der Stromspeicher temperaturgeführt und bei mindestens 0% Ladezustand (SOC) betrieben wird, weiterhin dass zumindest ein Ladepuls durchgeführt wird und / oder der oder die Stromspeicher über das Sicherungselement zu oder ausgeschaltet werden.

Im Folgenden wird die Erfindung anhand von Ausführungsbeispielen mit folgenden Figuren näher erläutert. Es zeigen

**Fig.1** beispielhaft die Systemeffizienz (Systemwirkungsgrad des Gesamtsystems inkl. der PV-Anlage und der Zwischenspeicherung) einer PV-Anlage ohne Schaltwandler bei einer Variation der Anzahl der Li-Ionen Zellen für zwei PV-Module bei einer Strahlung von 1000 W/m$^2$,

**Fig.2** beispielhaft die Systemeffizienz einer PV-Anlage ohne Schaltwandler bei einer Variation der Anzahl der Li-Ionen Zellen für zwei PV-Module bei einer Strahlung von 500 W/m$^2$,

**Fig.2.1 und 2.2** den I-V-Kurvenverlauf bzw. den angenäherten I-V Kurvenverlauf von Modul 1 der nachfolgend genannten Studie,

**Fig.2.3 und 2.4** den I-V Kurvenverlauf bzw. den P-V Kurvenverlauf bei verschiedenen Temperaturen,

**Fig.4.1** beispielhaft den Verlauf von $P_{tobatt}/P_{MPP}$ über den SOC für c = 7-10 und PV = 1 bei vier mögliche Konfigurationen mit unterschiedlicher Zahl von in Reihe geschalteten Lithium-Ionen-Zellen (c) und unterschiedlicher Zahl von in Reihe geschalteten PV-Modulen (PV),

**Fig.4.2 und 4.3** den Verlauf von $P_{tobatt}/P_{MPP}$ über den SOC für c = 16-19 und PV = 2 bzw. den Verlauf von $P_{tobatt}/P_{MPP}$ über den SOC für c = 70-73 und PV = 8 weitere mögliche Konfigurationen,

**Fig.5.1 und 5.2** jeweils einen Vergleich der Wirkungsgrade mit und ohne DC/DC-Wandler jeweils einer Ausführung (Konfiguration in vorgenannter Studie),

**Fig.6.1** die graphische Darstellung des Sicherheitsbereichs einer Ausführung,

**Fig.6.2** die Wirkungsgrade eines PV-BESS als Funktion von k,

**Fig.6.3** den Wirkungsgrad und einen sicheren Betriebsbereich der PV-BESS,

**Fig.7.1 und 7.2** den Wirkungsgrad der PV-BESS für c/PV wie angegeben und variablen T bzw. für c/PV = 7,5 und T° = [-10; 30] °C,

**Fig.7.3 und 7.4** den Zusammenhang von $P_{tobatt}/P_{MPP}$ über SOC bei verschiedenen Temperaturen idealisiert bzw. entsprechend einer realen Situation,

**Fig.8.1** das Verhältnis $P_{tobatt}/P_{MPP}$ über den Wert SOC bei verschiedenen Temperaturen mit $SOC_{MIN}$ = 20%,

**Fig.9** eine beispielhafte Verschaltung eines herkömmlichen elektrischen Stromerzeugers mit Laderegler mit DC/DC-Schaltwandler als Gleichspannungs-Gleichspannungs-Wandler zur direkten Gleichspannungswandlung zum Ab- oder Aufwärtswandeln eines Ausgangsstroms der Ladeschaltung gemäß des Stands der Technik,

**Fig.10.1 und 10.2** zwei beispielhafte Verschaltungen eines herkömmlichen elektrischen Stromerzeugers mit DC/AC-AC/DC-Schaltwandlersystem (umfassend jeweils einen Gleichspannungs-Wechselstrom- und einen Wechselstrom-Gleichspannungs-Wandler) als indirekte Gleichspannungswandlung zum Ab- oder Aufwärtswandeln eines Ausgangsstroms der Ladeschaltung gemäß des Stands der Technik sowie

Fig.11 eine beispielhafte Verschaltung einer Ausführung eines elektrischen Stromerzeugers mit Laderegler ohne Gleichspannungswandlung zum Ab- oder Aufwärtswandeln eines Ausgangsstroms der Ladeschaltung.

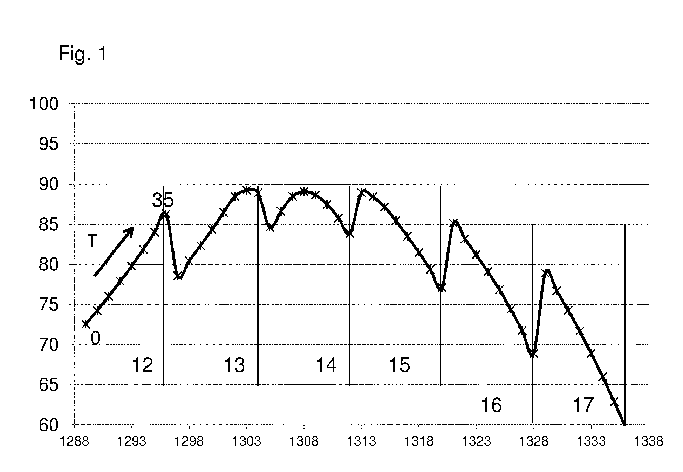

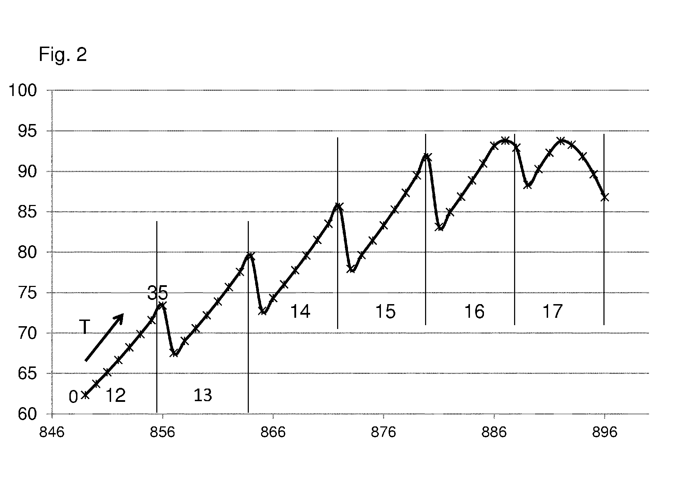

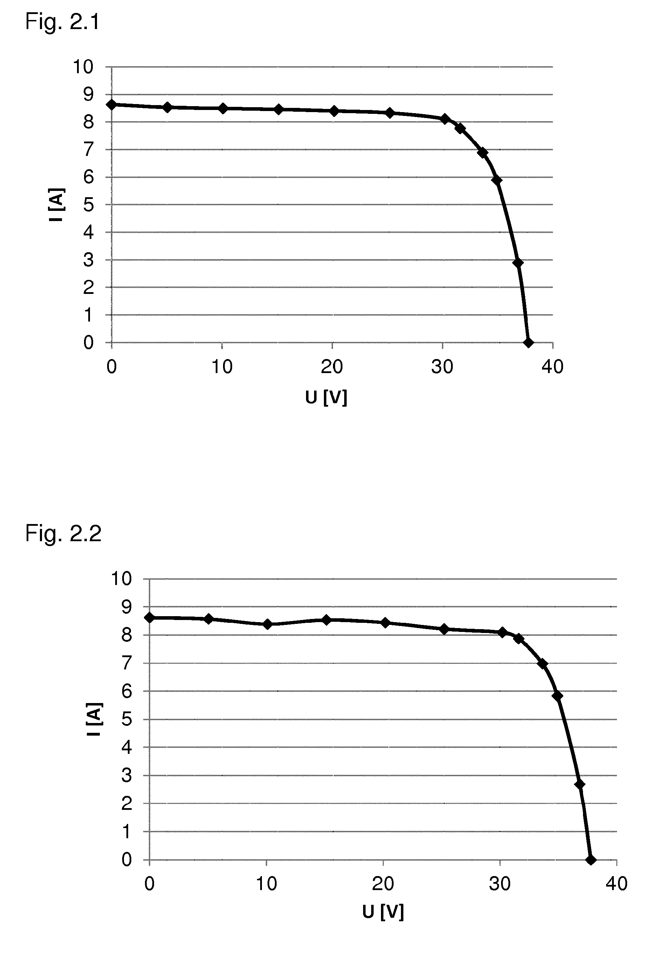

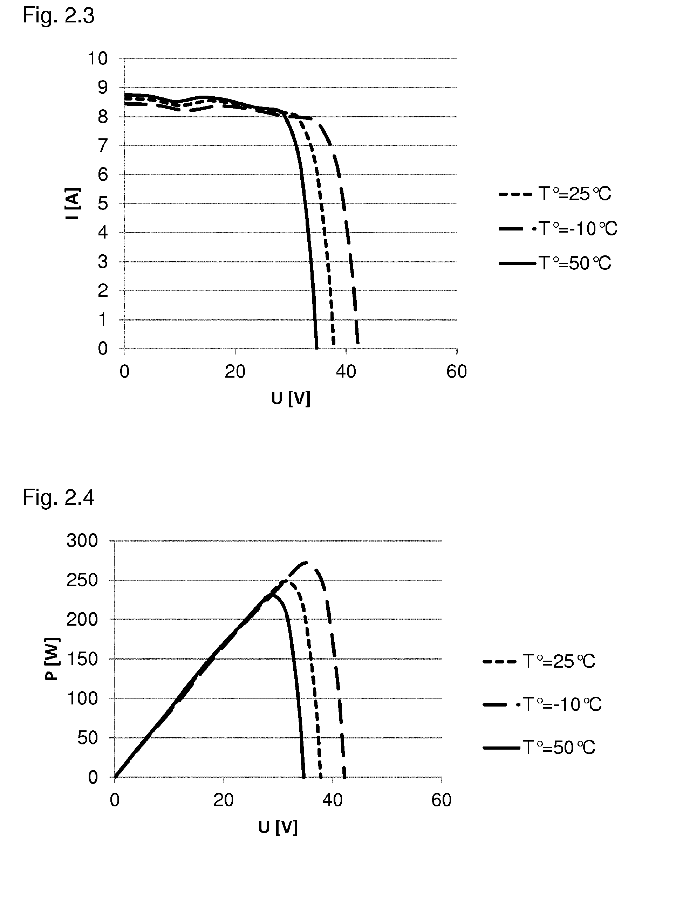

In dem in **Fig.1 und 2** dargestellten Ausführungsbeispiel wurde ein PV-Anlage , welche zwei PV-Module umfasst mit je 245 W bei einer MPP-Spannung von 30,2 $V_{mpp}$ und einem maximalen Strom $I_{mpp}$ 8,11 ausgewählt, und zwar bei Standard-Test-Bedingung in der Photovoltarik (STC = Standard Test Conditions) von 25°C Außentemperatur und einer solaren Strahlungsleistung von 1000 W/m$^2$. (gem. IEC 60904-3 (1989) Teil III definierten Spektrum des Sonnenlichts bei einer Luftmasse (Air Mass) von 1,5).

Der Betriebsbereich des verwendeten Stromspeichers, im Beispiel eine Lithium-Ionen-Zellen (Akkuzelle) wird auf 3,0 V bis maximal 4,2 V (Klemmspannung) eingestellt.

Die verwendeten Lithium-Ionen-Zellen als Stromspeicher sind direkt mit dem PV-Modul geschaltet, diese wurden in der Betriebsstrategie auf mindestens 0% des SOC eingestellt.

Eine Überladung oder ein zu hoher Ladestrom oder eine zu hohe Ladespannung wird an einer Akkuzelle durch eine Temperaturerfassung mit einem Temperaturerfassungssystem an dieser erfasst. Wird eine einstellbare Grenztemperatur erreicht, erzeugt das Temperaturerfassungssystem ein Steuersignal für einen vorzugsweise elektrisch schaltbaren Unterbrechungskontakt, der die direkte elektrische Verbindung zwischen Stromquelle und dem Stromspeicher (Akkuzelle oder Batterie), an dem die erhöhte Temperatur gemessen wurde zumindest in einer Phase unterbricht. Sinkt die Temperatur wieder, erfolgt mit einer erneuten Aktivierung des Unterbrechungskontakts eine Wiederherstellung der direkten elektrischen Verbindung. Der vorgenannte Unterbrechungskontakt ist ein Sicherungselement und wird technisch vorzugsweise als Leistungsschalter, Relais oder Schütz realisiert

Der Betriebsbereich der verwendeten Lithium-Ionen-Zellen wurde auf 3,0 bis max. 4,2 V eingestellt (SOC von 0-100%).

Beispielhaft wurde das System für zwei PV-Module in Serie mit direkt verschalteter Batterie, die aus Akkuzellmodulen als Batterien in der Batteriebaugruppe erfindungsgemäß besteht, aufgebaut und einer 1000 W solaren Einstrahlung sowie einer 500 W solaren Einstrahlung ausgesetzt. Die Batterie besteht aus einer Reihenschaltung von Akkuzellen.

**Fig.1 und 2** zeigen jeweils die Systemeffizienzen des vorgenannten Ausführungsbeispiels in Ladeschaltung ohne DC/DC-Schaltwandler. Dabei wurde während des Betriebs eine Variation der Anzahl der Li-Ionen Zellen für zwei PV-Module bei einer Strahlung von 1000 W/m$^2$ **(Fig.1)** und 500 W/m$^2$ **(Fig.2)** (zyklischer Sonnenschein, eine Sinushalbperiode 12 h) vorgenommen. Es ist die Systemeffizienz eines Systems, bestehend aus einer PV-Anlage mit zwei PV-Modulen und einer Batterie mit 12 bis 17 Li-Ionen Akkuzellen in Reihe verschaltet dargestellt. Die PV-Anlage und die Batterie sind dabei direkt, d.h. über einen direkten elektrischen Leiter ohne zwischengeschaltete elektronische Bauelemente (ausgenommen Schalter, Relais). Die Systemeffizienz ist zudem für jede Akkuzellenzahl für verschiedene Temperaturen T (Umgebungstemperaturen) angegeben, und zwar für 0,5, 10, 15, 20, 25, 30 und 35°C. In den Figuren sind die Extremwerte 0 und 35°C beschriftet, während die dazwischen liegenden Temperaturen in vorgenannter Reihenfolge mit Kreuzen auf dem Kurvenverlauf angegeben sind. Die Zellkapazität pro Akkuzelle betrug 50 Ah, die maximale Peakleistung (PV-Peak bei Standardbedingungen 25°C, 1000 W Einstrahlung) 245 W pro Modul, der SOC-Startwert lag bei 0% (vollständige Entladung).

Insbesondere in **Fig.1** erkennt man eine signifikante Abnahme der Systemeffizienz ab 15 in Reihe verschalteter Li-Ionen Akkuzellen (in **Fig.2** ab ca. 16 Akkuzellen, jeweils bei zwei aktiven PV-Zellen). Im beschriebenen Ausführungsbeispiel wurde folglich mit den dargestellten Betriebsbedingungen nachgewiesen, dass ein Überladen von mehr als 100% SOC bei mehr als 9 Zellen pro PV Modul nicht erreichbar ist.

Um eine erhöhte Effizienz zu erreichen ist es vorteilhaft, ein 5V Batteriesystem (5V pro Zelle), d.h. ein sogenanntes Hochvoltsystem der Lithium-Ionen Batterien als Stromspeicher einzusetzen.

Vorteilhaft ist, dass das Verhältnis von Batteriespannung zu serieller PV-Leerlaufspannung, im Bereich von 0,5-1,5 V, bevorzugt zwischen 0,5 und 0,85 V liegt.

Nachfolgend werden weitere bevorzugende Weiterbildungen von weiteren Ausführungsformen der Erfindung beschrieben.

Vorteilhaft weist bei einer Ausführungsform ein vorgegebener Ladevorgang wenigstens einen Ladepuls auf. Bei einem Ladepuls handelt es sich um einen zeitlich begrenzten zeitabhängigen Stromstärkeverlauf und/oder Spannungsverlauf, also wenn die Sonne scheint oder die Einstrahlung beispielsweise durch Wolken verdeckt wird, kann eine Ladevorschrift in Abfolge auch einzelne Pulse aufweisen.

Vorliegend ist unter einem Ladepuls eine zeitlich begrenzte Zufuhr oder Entnahme einer Energiemenge zu verstehen. Dabei kann die zugeführte oder entnommene elektrische Leistung über die Zeit veränderlich sein.

Vorteilhaft werden durch diese Ladepulse die Konstantspannungsphase des Stromspeichers aufgelöst und durch Ladepuls die einzelnen Akkumulatoren ausbalanciert. Dies geschieht über das Batteriemanagementsystem des Stromspeichers, welches die Zelle oder Batterie ausbalanciert, durch Freischalten dieser oder die Balancierungseinrichtung.

Vorteilhaft ist zudem das eine Zyklen-Lebensdauerverlängerung (bezogen auf Mindestanzahl an Lade/Entlade-Zyklen) des Akkumulators durch Reduzierung der Ladeendspannungen eintritt.

Vorteilhaft ist ebenso eine kalendarische Lebensdauerverlängerung (bezogen auf zeitabhängige Alterung) des Akkumulators durch die Reduzierung der Erwärmung durch zu hohe Belastungen und Ladezustände, Lebensdauerverlängerung des Akkumulators durch Definition Grenze $SOC_{min}/_{max}$ als Zu- und Abschaltkriterium erzielbar.

Bevorzugt ist die Lebensdauerverlängerung zyklisch und kalendarisch, auch durch Vermeidung von Sonne/keine Sonnenstrom (Solarflimmerzyklen) in hohem Ladezustand, z.B. in der Konstantspannungsphase.

Bevorzugt wird ein Memoryeffekt im Stromspeicher eingeschränkt oder vermieden, wenn die Stromspeicher teilweise über Ihren Betriebsbereich in einem speziellen Ladeverfahren gepulst geladen werden.

Dies kann erfindungsgemäß durch das Wegschalten über das Relais, die die direkte elektrische Verbindung zwischen Stromquelle und Stromspeicher unterbrechen oder durchschalten, erfolgen.

Vorteilhaft ist, dass bei niedrigen Temperaturen mit einer reduzierten Laderate C angeladen wird. Die Laderate C ist der auf die Kapazität des Akkus bezogene Lade- oder Entladestrom. Dadurch wird einer frühen Alterung oder gar Schädigung des Akkumulators sicher entgegengewirkt.

**Ausführungsbeispiel (Studie)**

**1. Einleitung**

Das Ziel dieser Studie ist zu zeigen, dass eine Kombination aus Photovoltaik-Generator und Lithium-Ionen-Batterie als batterieelektrisches Speichersystem (BESS) sicher und mit akzeptabler Effizienz ohne einen vor die Batterie geschalteten DC/DC-Wandler betrieben werden kann. Der Spannungspegel des Systems wird durch ein BESS nach Maßgabe des SOC (Füllstand der Batterie in%, State of Charge) eingestellt. Lediglich ein Relais ist zwischen Batterie und PV-Generator erforderlich, um die Batterie vor Überspannung zu schützen.

Vorteile:

• Weniger Wartung, da eine Baugruppe vollständig entfällt

• Weniger Systemausfälle durch den Ausfall elektronischer Bauteile

• Weniger Verlustwärmeerzeugung (daher weniger Kühlung erforderlich)

Nachteile

• Die Gesamtsystemeffizienz wird gegenüber einem System mit DC/DC-Steller reduziert, da der PV-Generator nicht immer im optimalen Leistungspunkt (maximum power point, MPP) betrieben wird.

**Bemerkung:** Alle zahlenmäßigen Ergebnisse in diesem Bericht sind von der konkret ausgewählten PV-Zellen-Technologie abhängig.

**2. Bildung von PV-Kurven**

Die Eigenschaften des ausgewählten PV-Moduls werden in **Tab.2.1** vorgestellt und die I-V Kurve aus dem Datenblatt des Herstellers erhalten. **Fig.2.1** zeigt den I-V-Kurvenverlauf von Modul 1.

**Tab.2.1** Eigenschaften von MODUL 1

| MODUL 1 | |
|---|---|
| Ausgangsleistung [W] | 245 |
| Vmpp [V] | 30,2 |
| Impp [A] | 8,11 |
| Voc [V] | 37,8 |
| Isc [A] | 8,63 |
| Temperaturkoeffizient von Pmax [%/°C] | -0,0045 |
| Temperaturkoeffizient von Voc [%/°C] | -0,0033 |
| Temperaturkoeffizient von Isc [%/°C] | 0,0006 |

(fortgesetzt)

| MODUL 1 | |
|---|---|
| Temperaturkoeffizient von Vmpp [%/°C] | -0,0045 |
| Arbeitstemperaturbereich T° | -40 to 85°C |

Um eine mathematische Beschreibung des Zusammenhangs zwischen PV-Spannung und Stromstärke zu ermitteln, wird eine I-V-Kurve mithilfe eines Polynoms sechsten Grades berechnet, wobei die Koeffizienten so gewählt werden, dass die vom Modulhersteller angegebene Kurvenform bestmöglich approximiert wird:

$$i_{PV} = -0,0000002043646964303 5 u_{PV}{}^6 + 0,00002005145070860250 u_{PV}{}^5$$
$$- 0,00074245419025587000 u_{PV}{}^4 + 0,01269578530212810000 u_{PV}{}^3$$
$$- 0,09708665257221580000 u_{PV}{}^2 + 0,24000358135344900000 u_{PV}$$
$$+ 8,62185875203681000000$$

Mit dieser Gleichung ist die Stromstärke eine Funktion der Spannung. Dann können Stromstärke und Leistung jederzeit für unterschiedliche Spannungen als Näherungswerte berechnet werden (vgl. **Tab.2.2**).

**Tab.2.1:** Näherungswerte von MODUL 1

| U [V] | I [A] | P [W] |
|---|---|---|
| 0 | 8,62 | 0,0 |
| 5,0 | 8,57 | 43,2 |
| 10,1 | 8,39 | 84,6 |
| 15,1 | 8,54 | 129,2 |
| 20,2 | 8,44 | 170,2 |
| 25,2 | 8,21 | 207,0 |
| 30,2 | 8,09 | 244,4 |
| 31,6 | 7,87 | 248,7 |
| 33,6 | 6,98 | 234,9 |
| 34,9 | 5,83 | 203,7 |
| 36,8 | 2,68 | 98,8 |
| 37,8 | 0,15 | 5,6 |

**Fig.2.2** zeigt den angenäherten I-V Kurvenverlauf von MODUL 1. Die gleiche Vorgehensweise wird für unterschiedliche Temperaturen im zulässigen Betriebstemperaturbereich der Anlage gewählt, die erhaltenen Daten zeigt die **Tab.2.3:**

**Tab.2.2:** Spannung, Stromstärke und Leistung für verschiedene Temperaturen

| T°=25°C | | | T°=-10°C | | | T°=50°C | | |
|---|---|---|---|---|---|---|---|---|
| U [V] | I [A] | P [W] | U [V] | I [A] | P [W] | U [V] | I [A] | P [W] |
| 0, 0 | 8, 6 | 0, 0 | 0, 0 | 8, 4 | 0, 0 | 0, 0 | 8, 8 | 0,0 |
| 5, 0 | 8, 6 | 43,2 | 5, 6 | 8, 4 | 47,2 | 4, 6 | 8, 7 | 40,3 |
| 10, 1 | 8, 4 | 84, 6 | 11,3 | 8, 2 | 92,4 | 9,3 | 8,5 | 78,8 |
| 15, 1 | 8,5 | 129,2 | 16, 9 | 8, 4 | 141,1 | 13, 9 | 8, 7 | 120,3 |
| 20,2 | 8,4 | 170,2 | 22,5 | 8,3 | 185,9 | 18,5 | 8,6 | 158,5 |
| 25,2 | 8,2 | 207,0 | 28,1 | 8,0 | 226,1 | 23,1 | 8,3 | 192,8 |
| 30,2 | 8,1 | 244,4 | 33,7 | 7,9 | 266,9 | 27,7 | 8,2 | 227,6 |
| 31, 6 | 7, 9 | 248,7 | 35,2 | 7,7 | 271,6 | 29,0 | 8,0 | 231,6 |
| 33, 6 | 7, 0 | 234,9 | 37, 56, | 8 | 256,5 | 30,9 | 7,1 | 218,7 |

(fortgesetzt)

| T°=25°C | | | T°=-10°C | | | T°=50°C | | |
|---|---|---|---|---|---|---|---|---|
| **U [V]** | I [A] | P [W] | U [V] | I [A] | P [W] | U [V] | I [A] | P [W] |
| 34, 9 | 5, 8 | 203,7 | 39,0 | 5,7 | 222,5 | 32, 0 | 5, 9 | 189,7 |
| 36, 8 | 2,7 | 98,8 | 41,1 | 2,6 | 107,9 | 33,8 | 2,7 | 92,0 |
| 37, 8 | 0, 0 | 0,0 | 42,2 | 0, 0 | 0,0 | 34,7 | 0, 0 | 0,0 |
| **Pmpp [W]** | | 244,9 | Pmpp [W] | | 283,5 | Pmpp [W] | | 217,4 |

**Fig.2.3** zeigt den I-V Kurvenverlauf bei verschiedenen Temperaturen. **Fig.2.4** zeigt den P-V Kurvenverlauf bei verschiedenen Temperaturen.

### 3. Batteriezelleneigenschaften

Die Batterie besteht aus Li-Ionen-Zellen, deren Einzelzellspannung $U_{cell}$ u.a. von der verwendeten Zellchemie und dem Ladungszustand abhängt. Für diese Untersuchung wurden Grenzwerte für die Einzelzellspannung festgelegt von $U_{cell\_min}$= 3,4V und $U_{cell\_max}$= 4, 2V.

### 4. Vorgehen:

### 4.1 Aufladungszustand (SOC, State of Charge)

Für eine gegebene PV-Generatorspannung $U_{PV}$ errechnet sich eine hypothetischer SOC der Batterie wie folgt:

$$\text{SOC} = \frac{U_{PV_{T°}} - U_{batt\_min}}{U_{batt\_max} - U_{batt\_min}} \qquad 4.1$$

Wenn $U_{PV}$ niedriger als $U_{BATT\_min}$ ist, dann wird der SOC negativ. Das bedeutet, dass in dieser Situation die Batterie nicht geladen werden kann, da die PV-Spannung bereits niedriger ist, als wenn die Batterie vollständig entladen wäre.
Umgekehrt darf die Batterie nicht weiter geladen werden, sobald der SOC > 100% wird, denn dann kann die Batterie beschädigt werden kann.

### 4.2 Untersuchung verschiedener Konfigurationen

Das Verhältnis $P_{tobatt}/P_{MPP}$ wird als Größe eingeführt, um den Wirkungsgrad der verschiedenen Systemkonfigurationen ohne DC/DC-Wandler zu quantifizieren. Sie bezeichnet die Leistung $P_{tobatt}$, die in die Batterie geladen wird (= die vom PV-Generator kommt) im Verhältnis zur maximalen Leistung $P_{MPP}$, die bei den gegebenen Bedingungen vom PV-Generator lieferbar wäre.

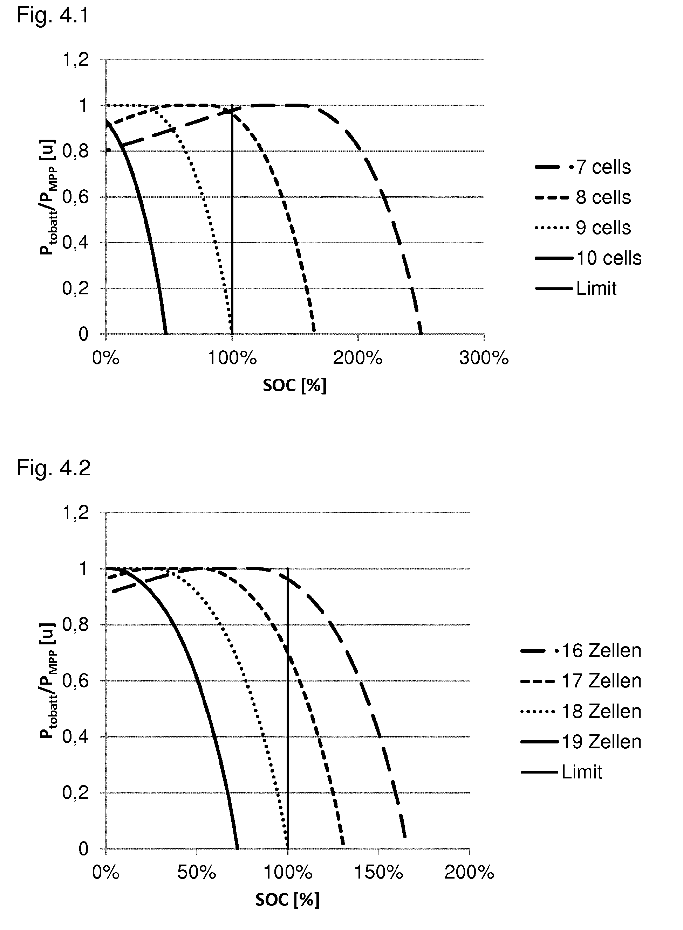

**Fig.4.1 zeigt** beispielhaft vier mögliche Konfigurationen mit unterschiedlicher Zahl von in Reihe geschalteten Lithium-Ionen-Zellen (c) und unterschiedlicher Zahl von in Reihe geschalteten PV-Modulen (PV). Die X-Achse zeigt dabei anstelle einer Spannung den berechneten (hypothetischen) SOC-Wert. Ab SOC = 100% ist die Batterie voll geladen, und ohne weitere Sicherheits-Beschaltung kann diese überladen und beschädigt werden. Auswirkungen der Temperatur werden hier noch weggelassen. **Fig.4.1** zeigt den Verlauf von $P_{tobatt}/P_{MPP}$ über den SOC für c = 7 - 10 und PV = 1.
Wie ist **Fig.4.1** zu interpretieren:

- 7 Zellen: Das PV-Modul beginnt bereits vor Erreichen des MPP mit der Aufladung der Batterie und würde diese erst bei SOC ≈ 250% beenden. Risiko der Überladung ($U_{PV\_max}$ > $U_{BATT\_max}$) ohne einer Sicherheitseinrichtung.
- 8 Zellen: Die PV beginnt vor MPP mit der Aufladung der Batterie und beendet diese bei SOC ≈ 170%. Risiko der Überladung ($U_{PV\_max}$ > $U_{BATT\_max}$) ohne einer Sicherheitseinrichtung.
- 9 Zellen: Die PV beginnt mit der Aufladung der Batterie erst kurz nach der MPP-Spannung (Anmerkung: die maximale Leistung wird zum Laden der Batterie nicht benötigt) und endet kurz nach SOC = 100%. Es gibt daher ein Risiko der Überladung der Batterie bei maximaler Sonneneinstrahlung und tiefen Temperaturen. Eine Sicherheitseinrichtung wäre notwendig.

- 10 Zellen: Die PV beginnt mit der Aufladung der Batterie deutlich oberhalb der MPP-Spannung und endet bei SOC ≈ 50%. Die Batterie kann niemals überladen werden, da $U_{PV\_max} < U_{BATT\_max}$. • SOC = 100% wird aber auch niemals erreicht. Man kann sagen, dass die Batterie überdimensioniert ist. Eine zusätzliche Sicherheitseinrichtung ist in diesem Fall nicht notwendig.

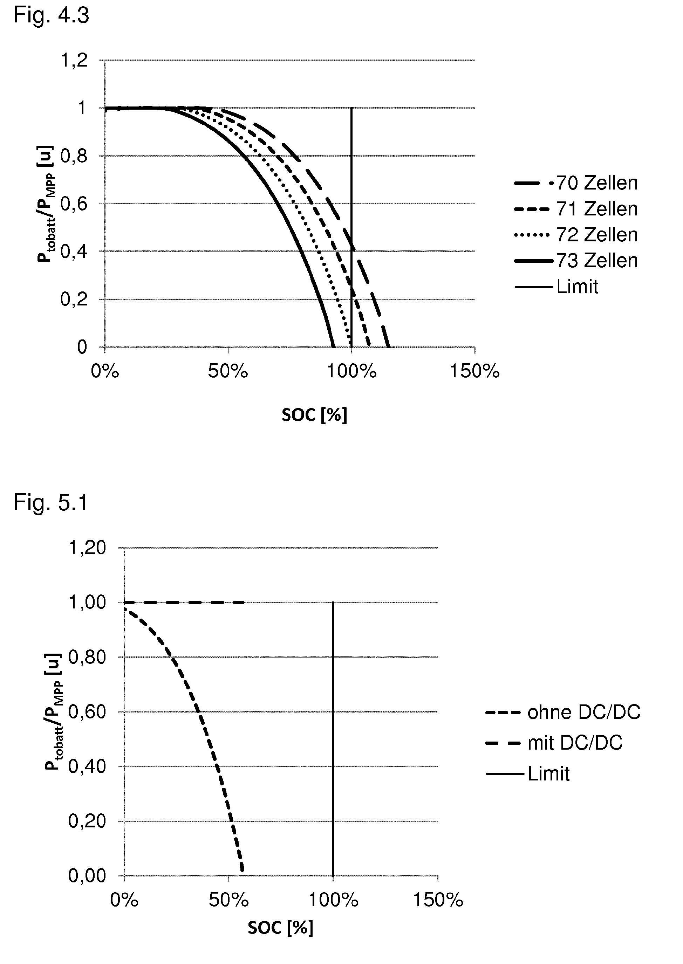

In **Fig.4.2 und 4.3** sind weitere mögliche Konfigurationen dargestellt. **Fig. 4.2** zeigt den Verlauf von $P_{tobatt}/P_{MPP}$ über den SOC für c = 16-19 und PV = 2. **Fig.4.3** zeigt den Verlauf von $P_{to\text{-}batt}/P_{MPP}$ über den SOC für c = 70-73 und PV = 8.

## 4.3 Berechnung des Wirkungsgrads (Effizienz)

Es ist bekannt, dass das Verhalten des PV-BESS Systems von der Temperatur beeinflusst wird, da die PV-Spannung stark abhängig von der Temperatur ist. Folglich wäre es sehr hilfreich, die Abhängigkeit zwischen der Temperatur und den anderen Parametern des Systems, wie z. B. der Anzahl der Batterie-Zellen und der Anzahl der PV-Module aufzustellen.

Der Temperatureinfluss auf Spannung und Strom eines PV-Generators bestimmt sich durch

$$U_{PV_{T°}} = U_{PV} \cdot PV \cdot [1 + \Delta U_{T°}(T - T_{STC})] \qquad 4.2$$

$$I_{PV_{T°}} = I_{PV} \cdot [1 + \Delta I_{T°}(T - T_{STC})] \qquad 4.3$$

wobei $U_{PV}$ die Spannung eines Einzelmoduls bei 25°C, PV die Anzahl der Module, $\Delta U_{T°}$ und $\Delta I_{T°}$ die Temperaturkoeffizienten von $U_{OC}$ bzw. $I_{SC}$ gemäß Herstellerangaben, T die Temperatur der PV-Module und $T_{STC}$ die Temperatur bei Standardtestbedingungen (STC, 25°C) sind.

Deshalb ist die Leistung der PV jederzeit berechenbar zu

$$P_{PV_{T°}} = U_{PV_{T°}} \cdot I_{PV_{T°}} \qquad 4.4$$

und insbesondere die Leistung beim MPP zu

$$P_{MPP_{T°}} = U_{MPP_{T°}} \cdot I_{MPP_{T°}} \qquad 4.5$$

wobei $U_{MPP\_T°}$ und $I_{MPP\_T°}$ die entsprechenden Spannungen und Stromstärken am MPP in Abhängigkeit zu der Temperatur gemäß **Fig.4.2** und **4.3** sind.

Damit können die Gleichungen 4.4 und 4.5 wie folgt zusammengefasst werden:

$$\frac{P_{tobatt}}{P_{MPP_{T°}}} = \frac{P_{PV_{T°}}}{P_{MPP_{T°}}} = \frac{U_{PV} \cdot I_{PV}}{U_{MPP} \cdot I_{MPP}} \qquad 4.6$$

wobei die Größe $P_{tobatt}/P_{MPP}$ den Leistungsverlust kennzeichnet, der dadurch entsteht, dass der PV-Generator nicht mit MPP-Spannung, sondern mit der vom aktuellen SOC der Batterie abhängenden Ladespannung betrieben wird. Es zeigt sich, dass $P_{to\text{-}batt}/P_{MPP}$ temperaturunabhängig ist.

Die Batteriespannung wird wie folgt berechnet:

$$U_{batt} = U_{cell} \cdot c \qquad 4.7$$

wobei $U_{batt}$ die Batteriespannung, $U_{cell}$ die Einzelzellspannung (Akkuzellen) und c die Anzahl der in Reihe geschalteten Einzelzellen in der Batterie sind.

Durch Kombination und Umstellung von 4.1, 4.2 und 4.7 erhält man

$$SOC = \frac{U_{PV} - U_{cell\_min} \cdot k}{U_{cell\_max} \cdot k - U_{cell\_min} \cdot k} \qquad 4.8$$

mit

$$k = \frac{c}{PV \cdot [1 + \Delta U_{T^\circ}(T - T_{STC})]} \qquad 4.9$$

Formel 4.9 ist von besonderer Bedeutung, da sie zeigt, dass die drei Parameter bzw. Variablen c, PV und T in k zusammenfassbar sind, so dass $P_{tobatt}/P_{MPP}$ bei Variation von k konstant bleibt, und nur der SOC nachberechnet werden muss. Es handelt sich bei der Einführung von k lediglich um eine Vereinfachung der Berechnungen.

Um die Berechnungen zu vereinfachen, kann Gleichung 4.9 umgeschrieben werden

$$c = k \cdot PV \cdot [1 + \Delta U_{T^\circ}(T - T_{STC})] \qquad 4.10$$

Schließlich errechnet sich der Wirkungsgrad mithilfe der Trapezregel zur Annäherung einer Summe an ein bestimmtes Integral nach:

$$\eta = \sum_{i=1}^{n} \frac{(SOC_i - SOC_{i-1}) \cdot \left(\frac{P_{tobatt_i}}{P_{MPP_{T^\circ}}} + \frac{P_{tobatt_{i-1}}}{P_{MPP_{T^\circ}}}\right)}{2} \qquad 4.11$$

wobei $\eta$ der Wirkungsgrad des PV-BESS Systems ist.

### 5. Vergleich mit / ohne DC/DC-Wandler

Mit der unter 3. beschriebenen Methode kann nach Wahl der Anzahl der Zellen (Akkuzellen) und der Anzahl sowie der Temperatur der PV-Module (oder auch nur nach Wahl der Anzahl der Zellen gem. Gleichung 4.10) die Effizienz einer konkreten PV-Batterie-Konfiguration berechnet werden. Vergleichsweise berechnen wir die Effizienz eines Systems mit einem DC/DC-Wandler, unter Zugrundelegung von Herstellerangaben für die Effizienz des Geräts. Zwei Beispiele werden vorgestellt.

Konfiguration A:

Tab.5.1 Eingabe Parameter (Konfiguration A)

| Eingabe Parameter | | |
|---|---|---|
| PV (PV-Modulanzahl) | 1 | in Serie |
| c (n° Akkuzellen) | 9 | in Serie |
| T°PV-Modul | 50 | °C |
| $\eta$ DC/DC | 95 | % |

**Fig.5.1** zeigt einen Vergleich der Wirkungsgrade mit und ohne DC/DC-Wandler (Konfiguration A).

Tab.5.2 Ergebnisse, ermittelt für eine Konfiguration ohne DC/DC-Wandler (Konfiguration A)

| Ohne DC/DC | |
|---|---|
| K | 9,8093 |

(fortgesetzt)

| Ohne DC/DC | |
|---|---|
| η | 37,30% |

**Tab.5.3** Ergebnisse, ermittelt für eine Konfiguration mit DC/DC-Wandler (Konfiguration A)

| Mit DC/DC | |
|---|---|
| η | 55,08% |

Konfiguration B:

**Tab.5.4:** Eingabeparameters (Konfiguration B)

| Eingabeparameter | | |
|---|---|---|
| n° PV-Modulanzahl | 1 | in Serie |
| n° Akkuzellenanzahl | 8 | in Serie |
| T°PV-Modul | 30 | °C |
| η DC/DC | 98 | % |

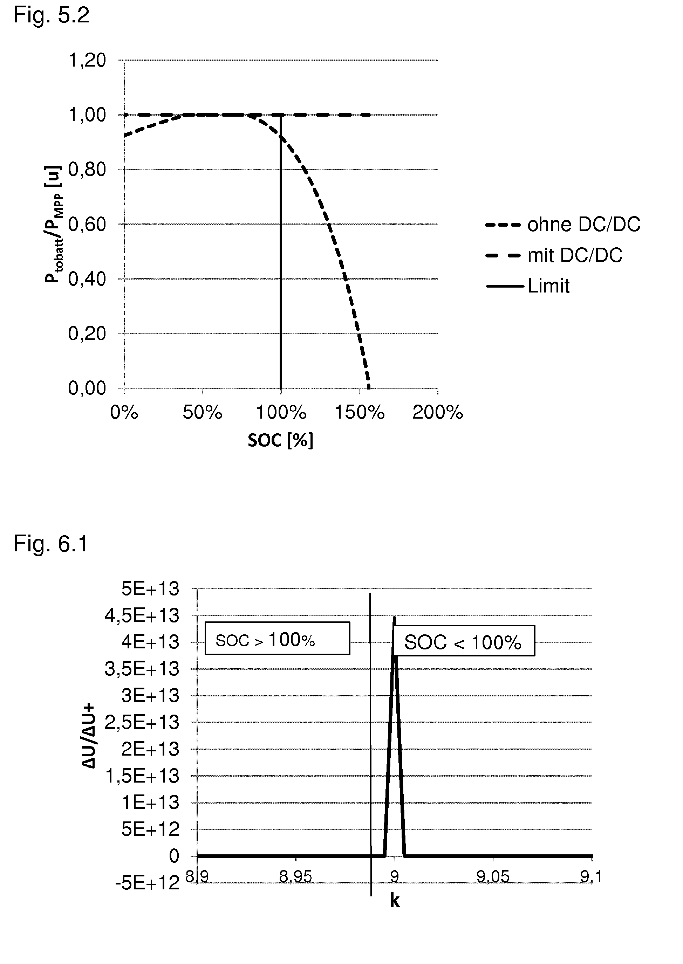

**Fig.5.2** zeigt einen Vergleich der Wirkungsgrade mit und ohne DC/DC-Wandler (Konfiguration B).

**Tab.5.5** Ergebnisse, ermittelt für eine Konfiguration ohne DC/DC-Wandler (Konfiguration B)

| Ohne DC/DC | |
|---|---|
| K | 8,1342 |
| η | 96,85% |

**Tab.5.6** Ergebnisse, ermittelt für eine Konfiguration mit DC/DC-Wandler (Konfiguration B)

| Mit DC/DC | |
|---|---|
| η | 97,89% |

Es zeigt sich, dass für Konfiguration A der Wirkungsgrad mit DC/DC-Wandler viel höher ist als ohne. Dagegen ist in Konfiguration B der Wirkungsgrad mit und ohne DC/DC-Wandler auf etwa 1% identisch. Dies führt zu der Idee, dass dies möglicherweise eine optimale Konfiguration in Bezug auf den Wirkungsgrad ist.

**6.Bestimmung der theoretische Werte**

**6.1 Bestimmung des Sicherheitsbereichs**

Um die Batterie vor Überspannungen zu schützen, ist die Bestimmung des sicheren Betriebsbereiches notwendig. Dazu wird wie folgt vorgegangen:

$$\Delta U = PV \cdot U_{OC} - PV \cdot U_{MPP} \qquad\qquad 6.1$$

$\Delta U$ repräsentiert die Differenz zwischen der Leerlaufspannung des PV-Generators und der MPP-Spannung des Generators. Dabei ist $U_{OC}$ die Leerlaufspannung eines Moduls, $U_{MPP}$ die MPP-Spannung eines Moduls und PV die Anzahl der PV-Module.

$$\Delta U^+ = PV \cdot U_{OC} - c \cdot U_{cell_{max}} \qquad 6.2$$

$\Delta U^+$ ist die erreichbare Überspannung des PV-Generators an BESS, c ist die Anzahl der Zellen (Akkuzellen) und Ucell$_{max}$ ist die maximale Spannung einer Batteriezelle bei SOC = 100%. Um die Sicherheit des BESS zu gewährleisten, muss $\Delta U^+$ negativ sein.

Aus 6.1 und 6.2 zusammengesetzt und umgestellt ergibt sich

$$\frac{\Delta U}{\Delta U^+} = \frac{U_{OC} - U_{MPP}}{U_{OC} - \frac{c}{PV} \cdot U_{cell_{max}}} \qquad 6.3$$

und einschließlich des Einflusses der Temperatur

$$\frac{\Delta U}{\Delta U^+} = \frac{U_{OC} \cdot [1 + \Delta U_{T°} \cdot (T° - 25)] - U_{MPP} \cdot [1 + \Delta U_{T°} \cdot (T° - 25)]}{U_{OC} \cdot [1 + \Delta U_{T°} \cdot (T° - 25)] - \frac{c}{PV} \cdot U_{cell_{max}}} \qquad 6.4$$

Aus 4.10 und 6.4 zusammengesetzt und umgestellt ergibt sich

$$\frac{\Delta U}{\Delta U^+} = \frac{U_{OC} - U_{MPP}}{U_{OC} - k \cdot U_{cell_{max}}} \qquad 6.5$$

Anschließend werden verschiedene Parameter aus realen PV-Modulen bzw. Batteriezellen eingesetzt, um einige theoretische Werte für das untersuchte PV-Batterie-System zu erhalten.

**Tab.6.1:** Eingabeparameter zur Berechnung des Sicherheitswerts

| Parameter | |
|---|---|
| $U_{oc}$ [V] | 37,8 |
| $U_{mpp}$ [V] | 30,2 |
| $U_{cell\_max}$ [V] | 4,2 |
| $\Delta U\_T°$ [%/K] | -0,33 |
| $SOC_{\_max}$ [%] | 100,00 |

**Fig.6.1** zeigt die graphische Darstellung des Sicherheitsbereichs

Nach Berechnungen und Betrachtung von **Fig.6.1** ist ableitbar, dass das System zur Sicherstellung eines sicheren Systems ohne jede Sicherheitsvorrichtung (wie Sicherungen oder Relais) mit k-Werten über 9 zu dimensionieren und betreiben ist (für die ausgewählte Systemfunktionen).

**6.2 Maximaler Wirkungsgrad**

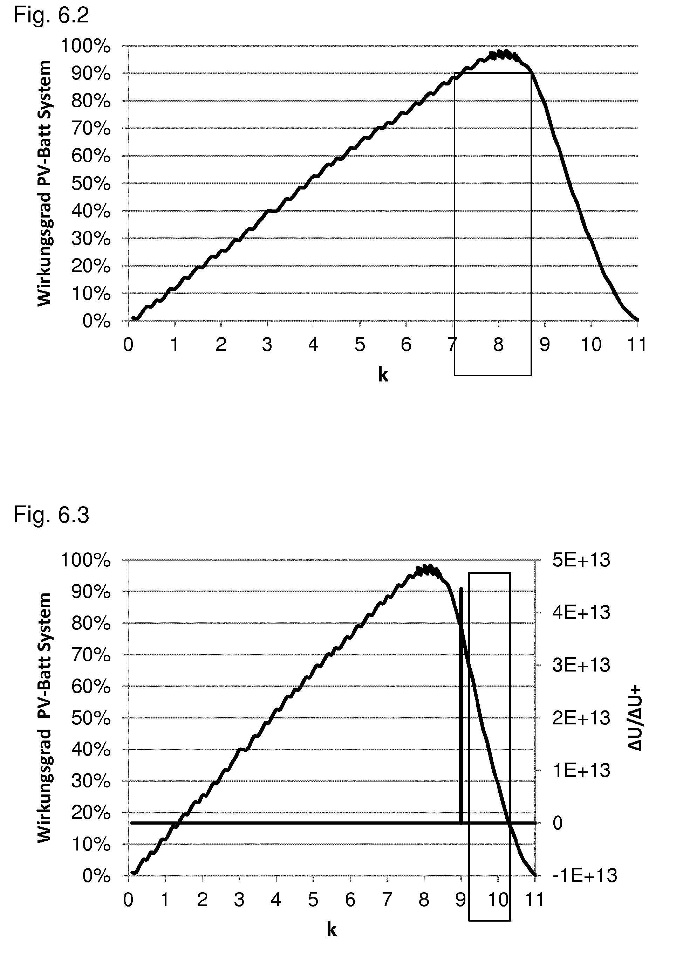

Gemäß Gleichung 4.3 ist die Berechnung des Wirkungsgrads aus jedem k-Wert möglich. Einen Verlauf mit allen ermittelten Ergebnissen zeigt **Fig.6.2.**

Es zeigt sich, dass Wirkungsgrade über 90% (ohne DC/DC-Wandler) mit k-Werten zwischen 7,2 und 8,7 erreicht werden. Der maximale Wirkungsgrad $\eta_{MAX}$ = 98.30% wird bei k = 8.16 erreicht.

**Fig.6.2** gibt die Wirkungsgrade einer PV-BESS als Funktion von k wieder

### 6.3 Bevorzugter Betriebsbereich

Um höchste Effizienz zu erhalten und gleichzeitig die Sicherheit des Systems zu gewährleisten, muss ein Kompromiss gefunden werden. Fig.6.3 gibt den Wirkungsgrad und einen sicheren Betriebsbereich der PV-BESS wieder.

Wie zuvor erläutert wird die vollständige inhärente Systemsicherheit bei k = 9 erreicht. Höhere Wirkungsgrade sind mit k = [7.2; 8.7] erzielbar, wobei in diesem Fall eine Sicherung oder ein Relais benötigt wird, um die nicht mehr vorhandene inhärente Systemsicherheit wiederherzustellen. Daher wird ein funktionierendes System bei k-Werten zwischen 8,5 und 9,5 erwartet, wobei die Wirkungsgrade zwischen 70% und 90% liegen.

### 7. Temperatureinfluss im System

In diesem Abschnitt wird der Einfluss der Temperatur untersucht. Ziel ist es zu bestimmen, wie wichtig dieser ist und wie hoch die Auswirkungen auf den Wirkungsgrad ausfallen während alle weiteren Parameter konstant bleiben.

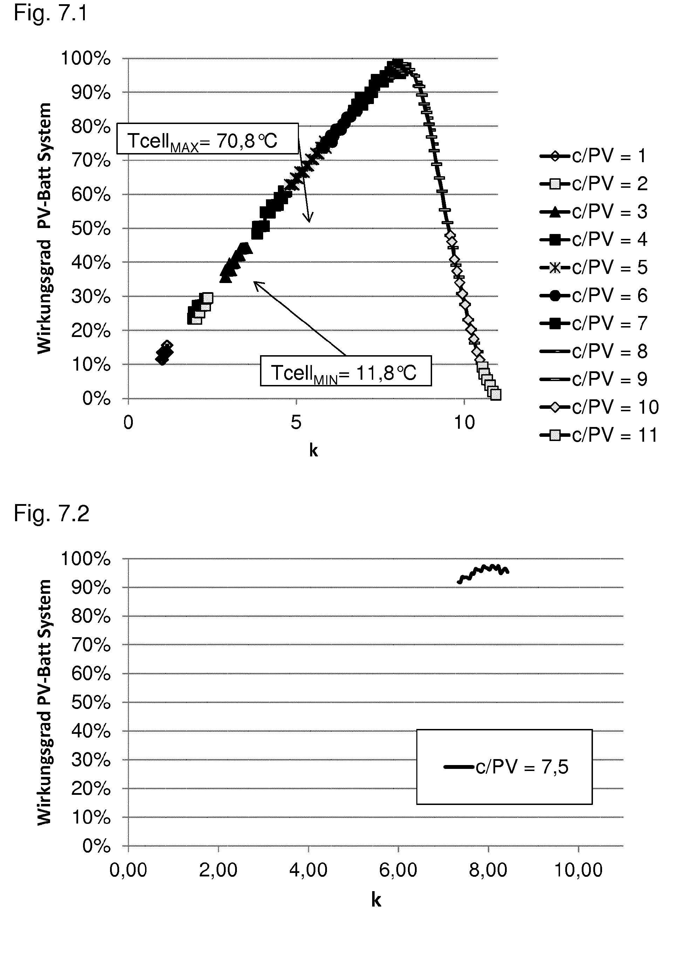

In **Fig.7.1** sind die gewonnenen Daten dargestellt. Jede Linie repräsentiert eine PV-Batteriekonfiguration (Zellenanzahl c/PV-Modulanzahl) bei verschiedenen Temperaturen. Es ist ratsam davon auszugehen, dass im Laufe des Tages die Temperatur des Moduls variieren wird und somit die Effizienz des gesamten Systems beeinflusst wird. Die Varianz der Zelltemperaturen wird entsprechend der maximalen und minimalen Umgebungstemperatur festgelegt.

**Fig.7.1** gibt den Wirkungsgrad des PV-BESS für c/PV sowie T° variabel an.

Mit Hilfe der bislang größten und kleinsten registrierten Temperaturen ist es möglich, die resultierende Temperatur der Zelle und somit die Effizienz zu berechnen. Im untersuchten Fall liegt $T_{MIN}$ bei 16.5°C und $T_{MAX}$ bei 42,5°C. Die Temperatur der Zelle kann wie folgt bestimmt werden:

$$Qcell = G \cdot (1 - \eta) \qquad 7.1$$

Wobei $Q_{cell}$ die erzeugte Wärme in der Zelle, G die Sonneneinstrahlung und $\eta$ der Wirkungsgrad des PV-Moduls ist. Zudem ist

$$Qcell = h \cdot A \cdot (Tcell - Tamb) \qquad 7.2$$

wobei h der Wärmedurchgangskoeffizient, A der Bereich des PV-Moduls (A = 2 * A da Konvektion auf beiden Seiten des PV-Mo-dulauftritt), $T_{cell}$ die Temperatur der Zelle und $T_{amb}$ die Umgebungstemperatur sind. Durch Umformung erhält man

$$Tcell = Tamb + \frac{Qcell}{h \cdot A} \qquad 7.3$$

Anschließend lassen sich die Wirkungsgrade jeder möglichen Zustands berechnen. Beispielsweise wurden in **Fig.7.2** die Wirkungsgrade untersucht für:

Akkuzellenzahl = 15
Anzahl an PV-Modulen = 2
Minimale Umgebungstemperatur = -10°C
Maximale Umgebungstemperatur = 30°C

**Fig.7.2** zeigt den Wirkungsgrad von PV-BESS für c/PV = 7,5 und T° = [-10; 30]°C.

Diese Berechnungen geben die Möglichkeit, einen bestimmten Temperaturbereich zu untersuchen, der möglicherweise von der vorgesehenen Sicherheit und dem erforderlichen Wirkungsgrad des Systems bestimmt wird.

Um eine Vorstellung davon, wie "unsicher" das ausgewählte System ist, wurden die erzielten Ergebnisse wie in 4.2 untersucht dargestellt.

**Tab.7.1:** Wirkungsgrade bei verschiedenen Temperaturen

| c/PV | Tamb | Tcell | K | η |
|------|------|-------|------|--------|
| 8,5 | -10 | 18 | 8,32 | 95,89% |
| | 10 | 38 | 8,89 | 83,91% |
| | 17 | 45 | 9,10 | 72,77% |
| | 30 | 58 | 9,55 | 49,71% |

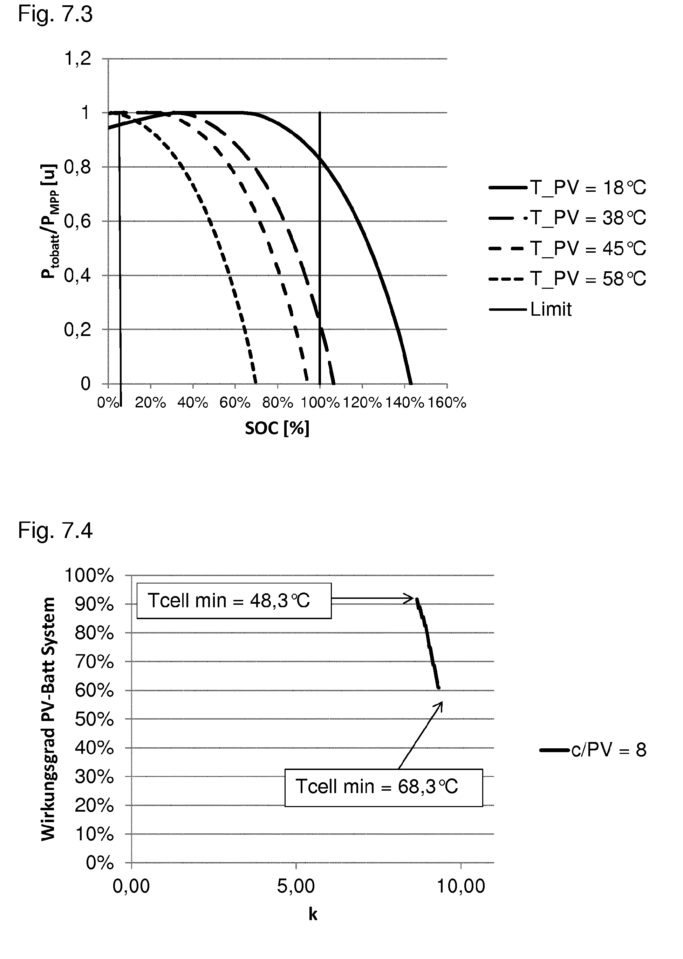

**Fig.7.3** zeigt $P_{tobatt}/P_{MPP}$ über SOC bei verschiedenen Temperaturen.

Es zeigt sich, dass sich für die ausgewählte Konfiguration (c/PV = 8,5) bei Umgebungstemperaturen unter 15°C (PV-Zelle-Temperatur unter 43°C) ein unsicherer Bereich ergibt. Die Sicherheit wäre erforderlich, um Batterieüberbeladung zu vermeiden.

Es zeigt sich, dass die Wahl eines Betriebs des Systems im Sicheren Bereich (ohne zusätzliche Sicherung) zu einer Verringerung des Wirkungsgrads führt. Durch ein Konstanthalten des Verhältnisses der Akkuzellenzahl / PV-Modulanzahl und gleichzeitiger Erhöhung der Sicherheit, die Kurven nach links verschoben werden. Daher sind $SOC_{MAX}$ und Wirkungsgrade reduziert.

Es muss gesagt werden, dass diese Berechnungen unter Annahme der schlimmsten möglichen Situation (d.h. ein sonniger und kalter Tag) erfolgten. Diese sind aus sicherheitstechnischen Gründen gewählte theoretische Maximalwerte. In der Realität erwartet man diese Extremwerte voraussichtlich maximal einmal im Jahr. Beispielsweise stellt man bei einem Betrieb der PV an einem ausgewählten Standort (Karlsruhe) nur im Sommer fest, dass die Umgebungstemperatur mit 1000W/m² zwischen 20 und 40°C oszilliert. Die Ergebnisse von c/PV = 8 sind in **(Tab.7.2)** dargestellt.

**Tab.7.2:** Wirkungsgrade bei verschiedenen Temperaturen entsprechend einer realen Situation

| c/PV | $T_{amb}$ | $T_{cell}$ | K | η |
|------|-----------|------------|-------|--------|
| 8 | 20 | 48 | 8, 67 | 91,65% |
| | 30 | 58 | 9,00 | 78,85% |
| | 35 | 63 | 9,16 | 68,90% |
| | 40 | 58 | 9,55 | 49,71% |

**Fig.7.4** zeigt den Verlauf von $P_{tobatt}/P_{MPP}$ über SOC bei verschiedenen Temperaturen entsprechend einer realen Situation.

## 8. Optimierung

### 8.1 Erhöhung von $SOC_{MIN}$

Zur Wirkungsgradsteigerung wurde eine Studie über den optimal minimalen SOC ausgeführt, wobei das Systems stets im sicheren Bereich verbleibt. Es ist zu prüfen, ob durch eine Variation dieser Parameter ein höherer Wirkungsgrad erreichbar ist, ohne das System zu gefährden.

Die Wirkungsgrade wurden bei Verwendung der gleichen Werte aus **Tab.7.1** und **Fig.7.3** berechnet.

**Tab.8.1** Wirkungsgrad bei verschiedenen Temperaturen mit $SOC_{MIN}$ = 20%

| c/PV | $T_{amb}$ | $T_{cell}$ | k | η | $η_{SOCmin}$=20 % |
|------|-----------|------------|------|--------|--------------------|
| 8,5 | -10 | 18 | 8,32 | 95,89% | 97,21% |
| | 10 | 38 | 8,89 | 83,91% | 78,53% |
| | 17 | 45 | 9,10 | 72,77% | 65,21% |
| | 30 | 58 | 9,55 | 49,71% | 36,19% |

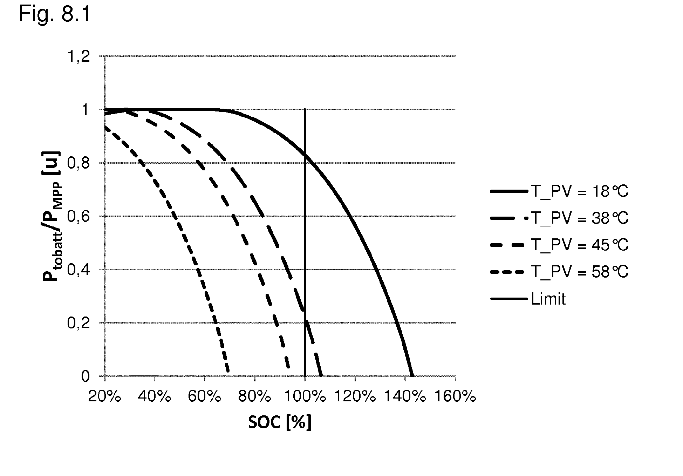

**Fig.8.1** zeigt $P_{tobatt}/P_{MPP}$ über SOC bei verschiedenen Temperaturen mit $SOC_{MIN}$ = 20%

Es kann davon ausgegangen werden, dass es von Vorteil ist, bei niedrigen Temperaturen den SOC im unteren Bereich auf 20% zu begrenzen. Jedoch ist es für reale Betriebszustände ersichtlich, dass durch die Festlegung eines

$SOC_{MIN} > 0\%$ der Wirkungsgrad fällt. Dies ist vor allem aufgrund der Tatsache, dass Kurven für einen sicheren Betriebs-Modus bereits für SOC = 0% sinken.

Eine Anhebung des kleinsten SOC auf einen Wert über 0% führt demzufolge nicht zu einem höheren Wirkungsgrad. Zur Erzielung eines höheren Wirkungsgrads sollte die maximale Spannung der Zelle erhöht werden.

### 8.2 Spannungsoptimierung

In diesem Abschnitt wird eine Steigerung der Effizienz durch Variation der Spannung der Zelle untersucht. Mit den folgenden Gleichungen lässt sich eine Optimierung über die Zellenspannung durchführen. Aus 4.9 und 6.2 ergibt sich unter hinzufügen des Temperatureinflusses:

$$U_{OC} - k \cdot U_{cell_{max}} = 0 \qquad\qquad 8.1$$

Nach Umformung

$$k = \frac{U_{OC}}{U_{cell_{max}}} \qquad\qquad 8.2$$

Anschließend wird der maximale Wirkungsgrad mit dem minimales k für die Sicherheit in Verbindung gesetzt. Hierdurch erhält man $U_{cellMAX}$.

Tab.8.2 Zellspannungsoptimierung

| η [%] | k | Uoc [V] | $U_{cellmax}$ [V] |
|---|---|---|---|
| 78,77% | 9 | 37,8 | 4,2 |
| 98,30% | 8,16 | 37,8 | 4,63 |

Um die Sicherheit zu gewährleisten, ergibt sich ein maximaler Wirkungsgrad für einen sicheren Betriebsbereich sowie eine $U_{cellMAX}$ • Um den maximalen Wirkungsgrad des Systems zu erhalten, sollte der SOC = 100% bei einer maximalen Zellspannung von der Zelle 4,63 V erreicht werden. Somit muss die Breite des Spannungsfensters der Zelle vergrößert werden. Leider arbeiten Lithium-Ionen-Zellen nicht bis zu dieser Spannung. Eine optimale Zelle würde im Bereich von $K \cdot V_{min} \leq V_{mpp}$ bis $K \cdot V_{max} = VOC$ arbeiten. Bei dieser Konfiguration würde die Sicherheit gewährleistet und würde der maximale Wirkungsgrad erreicht werden.

### 9. Zusammenfassung der Studie

Mit diesem Bericht wurde die Möglichkeit eines Betriebs eines PV-Batterie-System ohne DC/DC-Wandler untersucht. Es wurde gezeigt, dass:

- Das System ist ohne DC/DC-Wandler mit akzeptablen Wirkungsgraden betreibbar
- Temperatur ist ein kritischer Systemparameter
- Mit Erhöhung von $SOC_{min}$ erhält man geringere Wirkungsgrade im System
- Optimierung von k führt zu ansteigenden Maximalzellspannungen
- Letztendlich wird ein einfaches zusätzliches Sicherheitssystem benötigt (Schütz oder Sicherung)

**Ausführungsbeispiel:**

Beispielhaft wurde das System für 2 PV-Module in Serie mit direkt verschalteter Batterie, die aus Zellmodulen als Batterien in der Batteriebaugruppe erfindungsgemäß besteht, aufgebaut und einer 1000 W solaren Einstrahlung (vgl. Fig.2) sowie einer 500 W solaren Einstrahlung (vgl. Fig.1) **ausgesetzt.**

**Fig.1** repräsentiert die Systemeffizienz ohne Laderegler bei einer Variation der Anzahl der Li-Ionen Zellen für 2 PV-Module in Serie bei einer Strahlung von 500 W/m$^2$.

**Fig.2** repräsentiert die Systemeffizienz ohne Laderegler bei einer Variation der Anzahl der Li-Ionen Zellen für 2 PV-Module in Serie bei einer Strahlung von 1000 W/m$^2$.

In beiden Figuren ist die Systemeffizienz eines Systems, bestehend aus einer PV-Anlage mit 2 PV-Modulen und einer Batterie mit 12 bis 17 Li-Ionen Zellen dargestellt. Die PV-Anlage und die Batterie sind dabei hart miteinander verbunden. $T_{Umgebung}$ = 0,5,10,15,20,25,30,35 Grad Celsius; Zellkapazität: 50 Ah; PV_peak: 245 W pro Modul, SOC_Start = 0%.

In der beispielhaften Ausführung mit den basierenden Moduleigenschaften und den Zelleigenschaften und Betriebsbedingungen wurde gefunden, dass ein Überladen von mehr als 100% SOC bei mehr als neun Akkuzellen pro PV Modul nicht erreichbar ist.

Um eine erhöhte Effizienz zu erreichen ist es vorteilhaft ein 5V Batteriesystem, ein sogenanntes Hochvoltsystem der Lithium-Ionen Batterien als Stromspeicher einzusetzen. Vorteilhaft ist, dass das Verhältnis von Batteriespannung zu serieller PV-Leerlaufspannung im Bereich von 0,5-1,5 liegt. Gemäß einer besonderen Ausführung beträgt diese Verhältnis 0,5-0,85.

Somit wurde der effiziente und sichere Betrieb des PV-Stromerzeugers mit Stromspeicher gezeigt und verbessert und somit die zugrunde liegende Aufgabe gelöst.

Nachfolgend werden zu bevorzugende Weiterbildungen der Erfindung beschrieben.

Vorteilhaft weist eine vorgegebene Ladevorschrift wenigstens einen Ladepuls auf. Bei einem Ladepuls handelt es sich um einen zeitlich begrenzten zeitabhängigen Stromstärkeverlauf und/oder Spannungsverlauf. Durch Solarzyklen, also wenn die Sonne scheint oder die Einstrahlung beispielsweise durch Wolken verdeckt wird, kann eine Ladevorschrift in Abfolge auch einzelne Pulse aufweisen. Vorliegend ist unter einem Ladepuls eine zeitlich begrenzte Zufuhr oder Entnahme einer Energiemenge zu verstehen. Dabei kann die zugeführte oder entnommene elektrische Leistung über die Zeit veränderlich sein.

**Beispielhafte Verschaltungen**

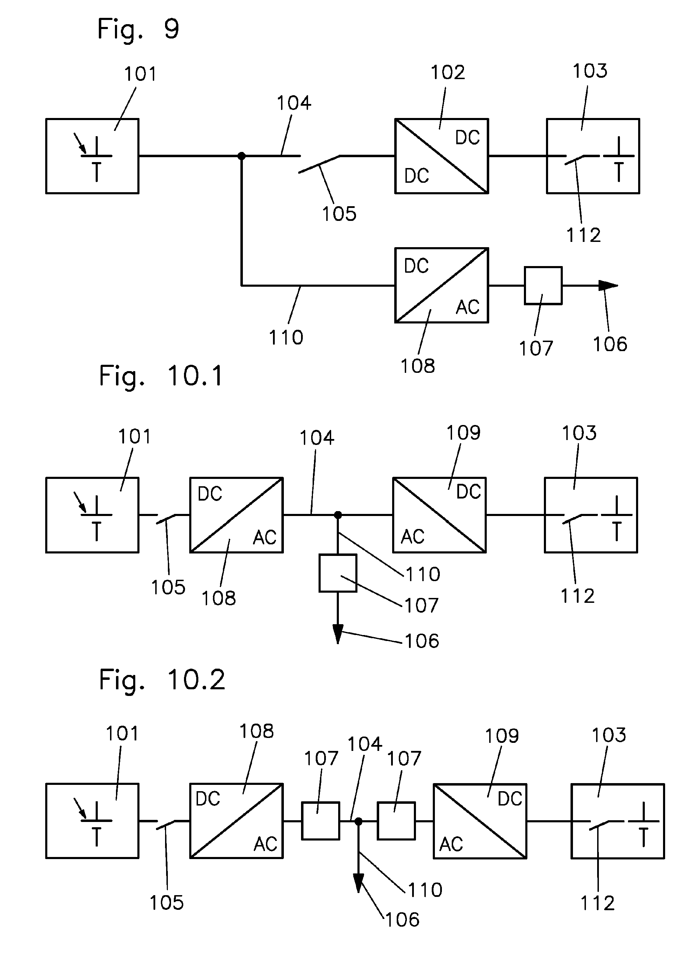

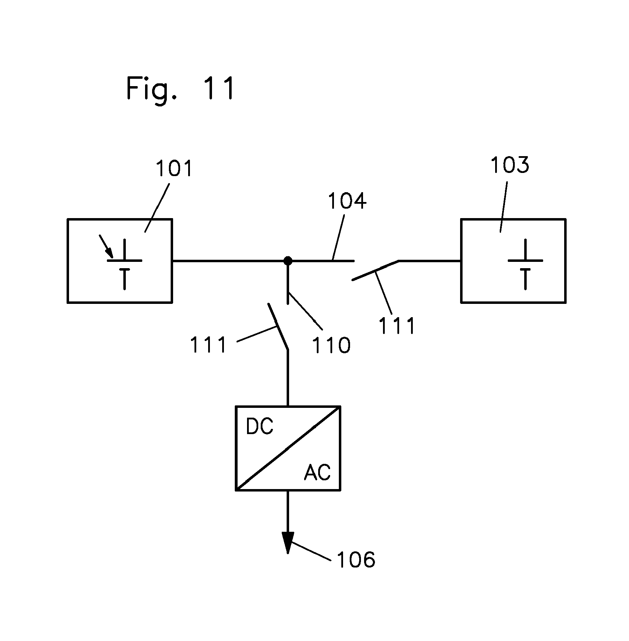

**Fig.9, 10.1 und 10.2** offenbaren beispielhafte Verschaltungen von herkömmlichen elektrischen Stromerzeugern mit Laderegler mit Schaltwandler zur Gleichspannungswandlung zum Ab- oder Aufwärtswandeln der Spannung eines elektrischen Ausgangsstroms der Ladeschaltung gemäß des eingangs genannten Stands der Technik. Der elektrische Stromerzeuger umfasst dabei mindestens eine Stromquelle **101** und mindestens einem Stromspeicher **103**, wobei eine Ladeschaltung vorgesehen ist und mindestens eine Stromquelle und mindestens ein Stromspeicher durch die Ladeschaltung miteinander über eine elektrische Verbindung **104** elektrisch verschaltet sind. Die Stromquelle ist eine DC-Quelle und umfasst vorzugsweise eine oder mehrere PV Einheiten (PV-Zellen, PV-Module, PV-Strings), der Stromspeicher in der Regel Akkumulatoren (Batterie, Akkuzellensatz, Akku), d.h. elektrochemische, physikalische Energiespeicher. Ferner besteht als Abzweigung **110** von der elektrischen Verbindung **104** nach Durchlauf einer Energiemessvorrichtung **107** eine Weiterleitung zu einem Netzanschluss **106** (Netzeinspeisung in das AC-Stromnetz). Ferner sind Unterbrecherkontakte **105** als Schaltelemente zur Aktivierung oder Deaktivierung einzelner Pfade vorgesehen. In der Stromquelle **101,** vorzugsweise gebildet durch eine Batterie, ist zudem ein an das Batteriemanagementsystem angeschlossener Trennschalter **112** vorgesehen, mit dem die jeweilige Batterie ab- und zuschaltbar ist (optional bei allen beschriebenen Ausführungen und Ausgestaltungen, auch gemäß **Fig. 11).**

**Fig.9** offenbart hierbei eine beispielhafte Verschaltung eines herkömmlichen elektrischen Stromerzeugers mit Laderegler mit DC/DC-Schaltwandler **102** als Gleichspannungs-GleichspannungsWandler zur direkten Gleichspannungswandlung zum Ab- oder Aufwärtswandeln eines Ausgangsstroms der Ladeschaltung. Die von der Stromquelle erzeugte Gleichspannung und zum Netzanschluss umgeleitete Anteil durchläuft zusätzlich einen DC-AC-Wandler **108.**

**Fig.10.1 und 10.2** zeigt dagegen zwei beispielhafte Verschaltungen eines herkömmlichen elektrischen Stromerzeugers mit DC/AC-AC/DC-Schaltwandlersystem (umfassend jeweils einen Gleichspannungs-Wechselspannungs-Wandler **108** und einen Wechselspannungs-Gleichspannungs-Wandler **109)** als indirekte Gleichspannungswandlung zum Ab- oder Aufwärtswandeln eines Ausgangsstroms der Ladeschaltung. Die von der Stromquelle erzeugte Gleichspannung und zum Netzanschluss umgeleitete Anteil durchläuft den DC-AC-Wandler **108** sowie einer Energiemessvorrichtung **107** in der Verbindung **104 (Fig.10.1)** oder in der Abzweigung **110 (Fig.10.2).**

**Fig.11** eine beispielhafte Verschaltung einer Ausführung eines elektrischen Stromerzeugers mit Laderegler ohne Gleichspannungswandlung zum Ab- oder Aufwärtswandeln eines Ausgangsstroms der Ladeschaltung gemäß den Patentansprüchen. Der dargestellte elektrische Stromerzeuger weist mindestens eine Stromquelle **101,** vorzugsweise mit photovoltarischen Zellen und mindestens einem Stromspeicher **103** auf, wobei eine Ladeschaltung vorgesehen ist und mindestens eine Stromquelle und mindestens ein Stromspeicher durch die Ladeschaltung miteinander über eine elektrische Verbindung elektrisch verschaltet sind, dadurch gekennzeichnet, dass die Ladeschaltung keine Gleichspannungswandlung aufweist. Erfindungsgemäß werden dabei wie vorgenannt die Ladebereiche und der Betriebsbereich insbesondere hinsichtlich eines vorzüglichen Parameters wie der Temperatur oder der Spannung an den Polklemmen der Stromspeicher **103,** zweier Parameter wie dem SOC und der Temperatur beschränkt, sowohl im Bereich der vollen Ladung wie hin zum leeren Ladezustand. Hierfür weist die Ladeschaltung bevorzugt zusätzliche elektrische Mittel wie Sicherungselemente **111,** umfassend vorzugsweise Erfassungsmittel für die Temperatur und / oder die Ladespannung sowie vorzugsweise mindestens einen Unterbrecherkontakt für die bevorzugt direkte elektrische Verbindung zwischen Stromquelle und Stromspeicher ohne eine Ladeelektronik (z.B. Gleichspannungswandlung) auf.

**Literatur**

[1] DE 10 2011 115 032 A1
[2] Voltwerk, Bosch Gruppe: Gegen den Strom, Mit der intelligenten Speicherlösung VS 5 Hybrid (Broschüre vom 13. Juni 2013
[3] Heinrich Häberlein: Photovoltaik Strom aus Sonnenlicht für Verbundnetz und Inselanlagen; 1. Auflage 2007, S.130

**Patentansprüche**

1. **Elektrischer Stromerzeuger** mit mindestens einer Stromquelle und mindestens einem Stromspeicher, wobei eine Ladeschaltung vorgesehen ist und mindestens eine Stromquelle **(101)** und mindestens ein Stromspeicher **(103)** durch die Ladeschaltung miteinander über eine elektrische Verbindung **(104)** elektrisch verschaltet sind, **dadurch gekennzeichnet, dass** die Ladeschaltung keine Gleichspannungswandlung aufweist.

2. Elektrischer Stromerzeuger nach Anspruch 1, **dadurch gekennzeichnet, dass** die mindestens eine Stromquelle **(101)** eine photovoltarische Stromquelle mit einer PV-Leerlaufspannung umfasst und die verschalteten photovoltarische Stromquellen je eine Leerlaufspannung und der verschalteten Stromspeicher je eine Batteriespannung aufweisen und das Verhältnis von Batteriespannung zu serieller PV-Leerlaufspannung zwischen 0,5 und 1,5 liegt.

3. Elektrischer Stromerzeuger nach Anspruch 1 oder 2, **dadurch gekennzeichnet, dass** die Ladeschaltung eine direkte elektrische Verbindung **(104)** zwischen Stromquelle **(101)** und Stromspeicher **(103)** ohne eine Ladeelektronik oder einen Laderegler aufweist.

4. Elektrischer Stromerzeuger nach einem der vorhergehenden Ansprüche, **dadurch gekennzeichnet, dass** ein oder mehrere Sicherungselemente **(111)** umfassend Erfassungsmittel für die Temperatur und/oder die Ladespannung der Stromspeicher **(103)** vorgesehen sind.

5. Elektrischer Stromerzeuger nach Anspruch 4, **dadurch gekennzeichnet, dass** die Sicherungselemente **(111)** mindestens einen elektrisch schaltbaren Unterbrechungskontakt in der direkte elektrische Verbindung umfasst.

6. Elektrischer Stromerzeuger nach einem der vorhergehenden Ansprüche, **dadurch gekennzeichnet, dass** ein Ladebereich vorgesehen ist, der durch eine Temperatur und / oder Ladespannung beschränkbar ist.

7. Elektrischer Stromerzeuger nach einem der vorhergehenden Ansprüche, **dadurch gekennzeichnet, dass** der Stromspeicher **(103)** Lithium-Ionen aufweist und eine Energiedichte von wenigstens 40 Wh/kg aufweist.

8. **Verfahren** zum Betreiben eines elektrischen Stromerzeugers nach einem der Ansprüche 1-7, **dadurch gekennzeichnet, dass** der elektrische Stromerzeuger **(101)** über eine elektrische Verbindung **(104)** mittels Ladeschaltung ohne Gleichspannungswandlung mit mindestens einen Stromspeicher **(103)** betrieben wird.

9. Verfahren nach Anspruch 8, **dadurch gekennzeichnet, dass** die verschalteten Stromquellen eine photovoltarische Stromquelle mit einer PV-Leerlaufspannung umfasst und der verschaltete Stromspeicher je eine Batteriespannung aufweisen und das Verhältnis von Batteriespannung zu serieller PV-Leerlaufspannung zwischen 0,5 und 1,5 liegt.

10. Verfahren nach Anspruch 8, **dadurch gekennzeichnet, dass** der Stromspeicher temperaturgeführt und bei mindestens 0% Ladezustand (SOC) betrieben wird.

11. Verfahren nach einem der Ansprüche 8 oder 9, **dadurch gekennzeichnet, dass** mindestens ein Ladepuls durchgeführt wird.

12. Verfahren nach einem der Ansprüche 8 bis 10, **dadurch gekennzeichnet, dass** Stromspeicher über das Sicherungselement zu oder ausgeschaltet werden.

Fig. 1

Fig. 2

Fig. 2.1

Fig. 2.2

Fig. 2.3

Fig. 2.4

Fig. 4.1

Fig. 4.2

Fig. 4.3

Fig. 5.1

## Fig. 5.2

## Fig. 6.1

Fig. 6.2

Fig. 6.3

Fig. 7.1

Fig. 7.2

Fig. 7.3

Fig. 7.4

Fig. 8.1

Fig. 9

Fig. 10.1

Fig. 10.2

Fig. 11

Europäisches
Patentamt

European
Patent Office

Office européen
des brevets

## EUROPÄISCHER RECHERCHENBERICHT

Nummer der Anmeldung

EP 14 40 1067

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/302681 A1 (YAMADA KAZUO [JP] ET AL) 10. Dezember 2009 (2009-12-10) * Zusammenfassung * * Absätze [0105] - [0120]; Ansprüche 1-9; Abbildungen 1,2,3,20 * ----- | 1-11 | INV. H01M10/46 H02J3/38 H02J7/35 |
| X | US 2012/176079 A1 (NAKASHIMA TAKESHI [JP] ET AL) 12. Juli 2012 (2012-07-12) * Zusammenfassung * * Absatz [0058]; Abbildungen 1-5 * ----- | 1-12 | |
| X | US 2012/047386 A1 (MATSUI RYOJI [JP]) 23. Februar 2012 (2012-02-23) * Absätze [0028] - [0037]; Abbildungen 1,2 * ----- | 1-12 | |

RECHERCHIERTE
SACHGEBIETE (IPC)

H01M
H02J

Der vorliegende Recherchenbericht wurde für alle Patentansprüche erstellt

| Recherchenort | Abschlußdatum der Recherche | Prüfer |
|---|---|---|
| München | 29. September 2014 | Jäschke, Holger |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 40 1067

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-09-2014

| Im Recherchenbericht angeführtes Patentdokument | Datum der Veröffentlichung | Mitglied(er) der Patentfamilie | | Datum der Veröffentlichung |
|---|---|---|---|---|
| US 2009302681 A1 | 10-12-2009 | EP | 1986306 A1 | 29-10-2008 |
| | | US | 2009302681 A1 | 10-12-2009 |
| | | WO | 2007086472 A1 | 02-08-2007 |
| US 2012176079 A1 | 12-07-2012 | CN | 102549878 A | 04-07-2012 |
| | | EP | 2472703 A1 | 04-07-2012 |
| | | JP | 2011120449 A | 16-06-2011 |
| | | US | 2012176079 A1 | 12-07-2012 |
| | | WO | 2011052407 A1 | 05-05-2011 |
| US 2012047386 A1 | 23-02-2012 | CN | 102422242 A | 18-04-2012 |
| | | EP | 2426570 A1 | 07-03-2012 |
| | | JP | 5449334 B2 | 19-03-2014 |
| | | US | 2012047386 A1 | 23-02-2012 |
| | | WO | 2010125878 A1 | 04-11-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• DE 102011115032 A1

**In der Beschreibung aufgeführte Nicht-Patentliteratur**

• **BOSCH GRUPPE.** *Gegen den Strom, Mit der intelligenten Speicherlösung VS 5 Hybrid,* 13. Juni 2013

• **HEINRICH HÄBERLEIN.** *Photovoltaik Strom aus Sonnenlicht für Verbundnetz und Inselanlagen,* 2007, 130